# EUROPÄISCHE PATENTSCHRIFT

(11) **EP 0 641 839 B1**
(45) Veröffentlichungstag und Bekanntmachung des Hinweises auf die Patenterteilung: **24.05.2000**
(21) Anmeldenummer: 94810480.7
(22) Anmeldetag: 22.08.1994
(51) Int. Cl.: C09B 62/04, C09B 62/503, C09B 62/465, C09B 62/08, C09B 62/44

(54) **Faserreaktive Farbstoffe, deren Herstellung und Verwendung**
Fiber-reactive dyes, their preparation and application
Colorants de fibres réactifs, leur préparation et leur utilisation

(30) Priorität: 01.09.1993 CH 259993
(43) Veröffentlichungstag der Anmeldung: 08.03.1995
(73) Patentinhaber: Ciba Specialty Chemicals Holding Inc., 4057 Basel (CH)
(72) Erfinder: Deitz, Rolf, CH-4058 Basel (CH); Müller, Bernhard, Dr., D-79588 Efringen-Kirchen (DE); Tzikas, Athanassios, Dr., CH-4133 Pratteln (CH)

(56) Entgegenhaltungen:
- EP-A- 0 302 006
- EP-A- 0 511 523
- EP-A- 0 624 629
- DE-A- 3 440 777

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind Reaktivfarbstoffe der Formel 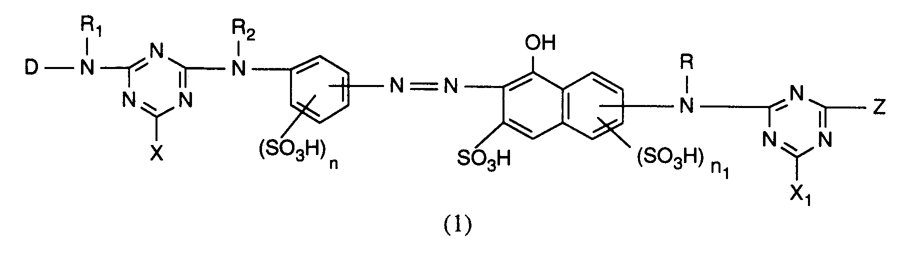 worin
D der Rest eines Monoazo-, Polyazo-, Metallkomplexazo-, Anthrachinon-, Phthalocyanin-, Formazan- oder Dioxazinchromophors ist,
R, R₁ und R₂ unabhängig voneinander je Wasserstoff oder gegebenenfalls durch Halogen, Hydroxy, Cyano, C₁-C₄-Alkoxy, C₁-C₄-Alkoxycarbonyl, Carboxy, Sulfamoyl, Sulfo oder Sulfato substituiertes C₁-C₄-Alkyl bedeuten,
X für Chlor, Fluor, Brom, 3-Carboxypyridin-1-yl oder 3-Carbamoylpyridin-1-yl steht,
X₁ und Z unabhängig voneinander je eine der für X genannten Bedeutungen haben oder für Hydroxy, C₁-C₄-Alkoxy, Phenoxy, C₁-C₄-Alkylthio, Morpholino, Amino, N-C₁-C₄-Alkylamino oder N,N-Di-C₁-C₄-Alkylamino, wobei das Alkyl gegebenenfalls durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl gegebenenfalls durch C₁-C₄-Alkyl, C₁-C₄-Alkoxy, C₂-C₄-Alkanoylamino, Carboxy, Sulfo oder Halogen substituiert ist oder für einen Reaktivrest der Formel 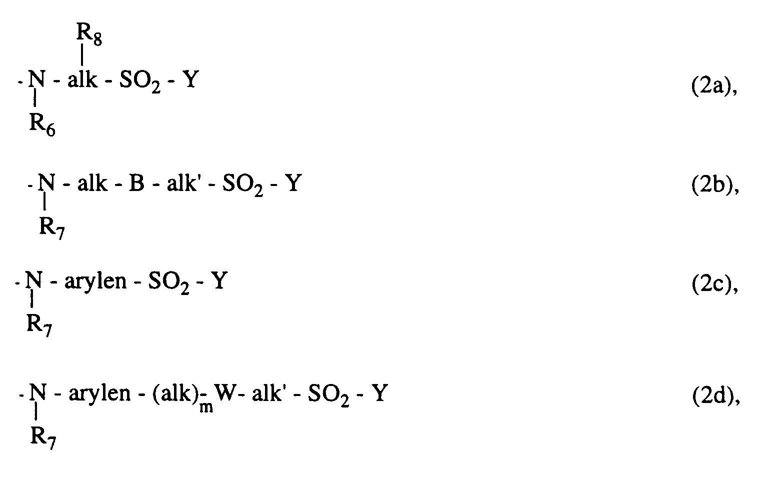 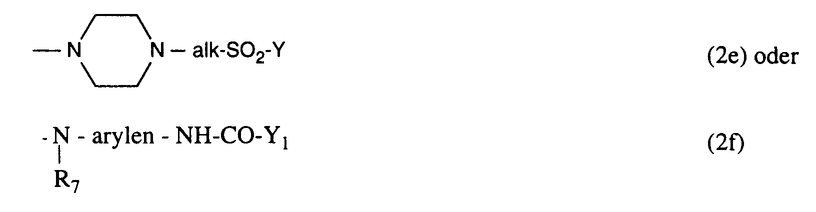 stehen,
R₆ Wasserstoff, gegebenenfalls durch Hydroxy, Sulfo, Sulfato, Carboxy oder Cyano substituiertes C₁-C₄-Alkyl oder einen Rest 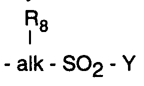 bedeutet,
R₇ für Wasserstoff oder C₁-C₄-Alkyl steht,
R₈ Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Y ist,
alk und alk' unabhängig voneinander C₁-C₆-Alkylen sind,
arylen einen unsubstituierten oder durch Sulfo, Carboxy, C₁-C₄-Alkyl, C₁-C₄-Alkoxy oder Halogen substituierten Phenylen- oder Naphthylenrest bedeutet
Y Vinyl oder ein Rest -CH₂-CH₂-U und U eine Abgangsgruppe ist,
Y₁ für eine Gruppe -CHX₂-CH₂X₂ oder -CX₂=CH₂ steht und X₂ Chlor oder Brom bedeutet,
B den Rest -O- oder -NR₇- bedeutet,
W für eine Gruppe -SO₂-NR₆-, -CONR₆- oder -NR₆CO- steht, und
m die Zahl 0 oder 1, n die Zahl 1 oder 2 und n₁ die Zahl 0 oder 1 bedeuten,
   mit der Massgabe, dass
der Chromophor D keine faserreaktive Triazingruppe enthält, falls D ein 1-Amino-7-(5'-amino-2'-sulfophenylazo)-8-naphthol-3,6-disulfonsäure-, 1-Amino-7-(5'-amino-2'-sulfophenylazo)-8-naphthol-4,6-disulfonsäure- oder 2-Amino-6-(5'-amino-2'-sulfophenylazo)-5-naphthol-7-sulfonsäurerest ist.

Aus der DE-A-34 40 777 sind basische Farbstoffe bekannt, die sich von den erfindungsgemässen Farbstoffen der Formel (I) durch die Substituenten am terminalen Triazinring und durch die fehlende Sulfogruppe am Phenylring unterscheiden.

Die in der EP-A-624 629 offenbarten Farbstoffe unterscheiden sich vom Gegenstand der vorliegenden Erfindung durch den Chromophor D.

C₁-C₄-Alkyl bedeutet generell Methyl, Ethyl, n- oder iso-Propyl oder n-, iso-, sec.- oder tert.-Butyl; C₁-C₄-Alkoxy umfasst generell Methoxy, Ethoxy, n- oder iso-Propoxy und n-, iso-, sec.- oder tert.-Butoxy; Halogen steht generell z.B. für Fluor, Brom oder insbesondere Chlor; C₁-C₄-Alkoxycarbonyl bedeutet generell Methoxycarbonyl, Ethoxycarbonyl, n- oder iso-Propoxycarbonyl oder n-, iso-, sec.- oder tert-Butoxycarbonyl, vorzugsweise Methoxycarbonyl oder Ethoxycarbonyl. Beispiele für C₁-C₄-Alkanoyloxy sind Acetyloxy oder Propionyloxy. Beispiele für C₁-C₄-Alkylthio sind Methylthio und Ethylthio.

Beispiele für geeignete Alkylreste R, R₁ und R₂ sind unsubstituiertes C₁-C₄-Alkyl, Carboxymethyl, β-Carboxyethyl, β-Carboxypropyl, Methoxycarbonylmethyl, Ethoxycarbonylethyl, β-Methoxyethyl, β-Ethoxyethyl, β-Methoxypropyl, β-Chlorethyl, β-Hydroxyethyl, β-Hydroxybutyl, β-Cyanoethyl, Sulfomethyl, β-Sulfoethyl, β-Sulfatoethyl und γ-Bromopropyl.

R, R₁ und R₂ stehen unabhängig voneinander je bevorzugt für Wasserstoff oder C₁-C₄-Alkyl, besonders bevorzugt für Wasserstoff, Methyl oder Ethyl und insbesondere bevorzugt für Wasserstoff.

X bedeutet bevorzugt Fluor oder Chlor.

Beispiele für geeignete nicht-reaktive Reste X₁ und Z sind unabhängig voneinander Amino, Methylamino, Ethylamino, β-Hydroxyethylamino, N,N-Di-β-Hydroxyethylamino, β-Sulfoethylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Ethyl-N-phenylamino, N-Methyl-N-phenylamino, Methoxy, Ethoxy, n- oder iso-Propoxy sowie Hydroxy.

Als nicht-reaktiver Rest haben X₁ und Z unabhängig voneinander je vorzugsweise die Bedeutung C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist.

Besonders bevorzugte nicht-reaktive Reste X₁ und Z sind unabhängig voneinander je Amino, N-Methylamino, N-Ethylamino, Morpholino, Phenylamino, 2-, 3- oder 4-Sulfophenylamino oder N-C₁-C₄-Alkyl-N-phenylamino.

Geeignete Abgangsgruppen U sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H, vorzugsweise -OSO₃H.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

X₂ bedeutet vorzugsweise Brom.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' unabhängig voneinander je für einen C₁-C₄-Alkylenrest und insbesondere bevorzugt für einen Ethylenrest oder Propylenrest.

arylen ist vorzugsweise ein unsubstituierter oder z.B. durch Sulfo, Methyl, Methoxy oder Carboxy substituierter 1,3- oder 1,4-Phenylenrest und besonders bevorzugt ein unsubstituierter 1,3- oder 1,4-Phenylenrest.

R₆ ist vorzugsweise Wasserstoff oder C₁-C₄-Alkyl, wie Methyl, Aethyl, Propyl, Isopropyl, Butyl, Isobutyl, sek.-Butyl oder tert.-Butyl. Besonders bevorzugt ist R₆ Wasserstoff.

R₇ bedeutet bevorzugt Wasserstoff, Methyl oder Aethyl, insbesondere Wasserstoff.

R₈ bedeutet bevorzugt Wasserstoff.

B steht vorzugsweise für -NH- oder -O- und insbesondere bevorzugt für - O-.

W bedeutet bevorzugt eine Gruppe der Formel -CONH- oder -NHCO-, insbesondere eine Gruppe der Formel -CONH-.

Bevorzugt als Reaktivreste der Formeln (2a) bis (2f) sind solche, worin W eine Gruppe der Formel -CONH- oder -NHCO-, R₆, R₇ und R₈ je Wasserstoff, B der Rest - O- oder -NH- , alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und m die Zahl 0 bedeuten.

Besonders bevorzugte faserreaktive Reste X₁ oder Z entsprechen der Formel 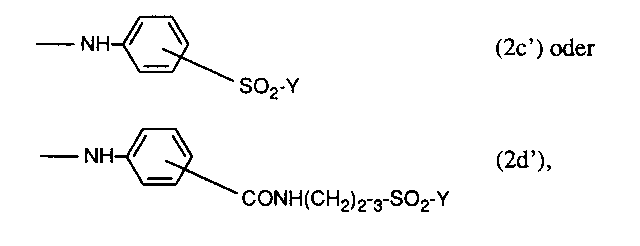 worin Y Vinyl oder β-Sulfatoethyl ist.

X₁ steht bevorzugt für Chlor, Fluor, Amino, N-C₁-C₄-Alkylamino, das im Alkylteil unsubstituiert oder durch Hydroxy, Sulfato oder Sulfo substituiert ist, Morpholino oder für Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist. Besonders bevorzugt sind für X₁ die Bedeutungen Chlor oder Fluor. Eine bevorzugte Ausführungsform der Erfindung betrifft Verbindungen der Formel (1), worin X und X₁ jeweils Fluor bedeuten. Eine weitere bevorzugte Ausführungsform der Erfindung betrifft Verbindungen der Formel (1), worin X Chlor und X₁ Fluor bedeuten.

Z bedeutet bevorzugt C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen Reaktivrest der zuvor angegebenen Formeln (2a) bis (2f), worin W eine Gruppe der Formel -CONH- oder -NHCO-, R₆, R₇ und R₈ je Wasserstoff, B der Rest -O- oder -NH- , alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und m die Zahl 0 sind.

Z bedeutet besonders bevorzugt Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen faserreaktiven Rest der Formel 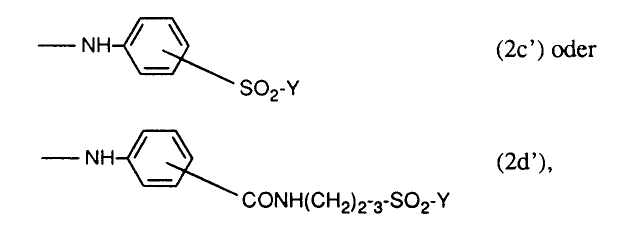 worin Y Vinyl oder β-Sulfatoethyl ist.

Von besonderem Interesse sind Verbindungen der Formel (1), worin Z einen faserreaktiven Rest der zuvor angegebenen Formel (2c') oder (2d') bedeutet.

n und n₁ bedeuten unabhängig voneinander jeweils bevorzugt die Zahl 1.

Als Beispiele für Substituenten im Rest D seien genannt: Alkylgruppen mit 1 bis 12 Kohlenstoffatomen, insbesondere 1 bis 4 Kohlenstoffatomen, wie Methyl, Aethyl, Propyl, Isopropyl oder Butyl, Alkoxygruppen mit 1 bis 8 Kohlenstoffatomen, insbesondere 1 bis 4 Kohlenstoffatomen, wie Methoxy, Aethoxy, Propoxy, Isopropoxy oder Butoxy, Alkanoylaminogruppen mit 2 bis 8 Kohlenstoffatomen, insbesondere 2 bis 4 Kohlenstoffatomen, wie Acetylamino oder Propionylamino, Phenyl- oder Naphthylamino, Alkoxycarbonylaminogruppen mit 2 bis 8 Kohlenstoffatomen, insbesondere 2 bis 4 Kohlenstoffatomen, Alkanoylgruppen mit 2 bis 8 Kohlenstoffatomen, insbesondere 2 bis 4 Kohlenstoffatomen, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Phenyl- oder Naphthylsulfonyl, Alkoxycarbonyl mit 1 bis 4 Kohlenstoffatomen im Alkoxyrest, wie Methoxycarbonyl oder Aethoxycarbonyl, Benzoyl, gegebenenfalls am Stickstoff durch C₁-C₄-Alkyl substituiertes Benzoylamino, Phenyl, Naphthyl, Amino, durch C₁-C₁₂-Alkyl, Phenyl oder Naphthyl mono- oder disubstituiertes Amino, Trifluormethyl, Nitro, Cyano, Hydroxyl, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Carboxy, Sulfomethyl, Sulfo oder Sulfato sowie faserreaktive Reste, wobei die einen Alkyl-, Phenyl- oder Naphthylrest enthaltenden Substituenten im Alkyl-, Phenyl- oder Naphthylrest weitersubstituiert sein können, wie z.B. durch die oben für D genannten Substituenten. Die Alkylreste können zudem durch Sauerstoff (-O-) unterbrochen sein.

Unter faserreaktiven Resten sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen. Die faserreaktiven Reste sind in der Regel direkt oder über ein Brückenglied an den Farbstoffrest gebunden. Geeignete faserreaktive Reste sind beispielsweise solche, die mindestens einen abspaltbaren Substituenten an einem aliphatischen, aromatischen oder heterocyclischen Rest enthalten oder worin die genannten Reste einen zur Reaktion mit dem Fasermaterial geeigneten Rest, wie z.B. einen Vinylrest, enthalten.

Enthält D einen faserreaktiven Rest, so entspricht dieser bevorzugt der Formel

-SO₂-Y (2g) oder

-CONR₇-alk-SO₂-Y (2h),

worin für alk, R₇ und Y die zuvor genannte Bedeutung gilt.

Bevorzugte Bedeutungen von D betreffen:
a) Farbstoffreste eines 1:1-Kupferkomplexazofarbstoffes der Benzol- oder Naphthalinreihe, worin das Kupferatom an je eine metallisierbare Gruppe beidseitig in ortho-Stellung zur Azobrücke gebunden ist.
b) Farbstoffreste eines Mono- oder Disazofarbstoffes, der Formel

   D*-N=N-(M-N=N)ᵤ-K- (3a),

   -D*-N=N-(M-N=N)ᵤ-K (3b) oder

   -D*-N=N-(M-N=N)ᵤ-K- (3c), (3c),

   oder eines davon abgeleiteten Metallkomplexes; D* ist der Rest einer Diazokomponente der Benzol- oder Naphthalinreihe, M der Rest einer Mittelkomponente der Benzol-oder Naphthalinreihe, und K der Rest einer Kupplungskomponente der Benzol-, Naphthalin-, Pyrazolon-, 6-Hydroxypyridon-(2)- oder Acetessigsäurearylamid-Reihe, wobei D*, M und K bei Azofarbstoffen übliche Substituenten tragen können, insbesondere Hydroxy-, Amino-, Methyl-, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome; u = 0 oder 1 ist; und D*, M und K zusammen mindestens zwei Sulfogruppen, vorzugsweise drei oder vier Sulfogruppen, enthalten.
c) Farbstoffreste eines Disazofarbstoffes, der Formel

   -D*-N=N-K₁-N=N-D₁* (4a) oder

   -D*-N=N-K₁-N=N-D₁*- (4B),

   worin D* und D₁* unabhängig voneinander der Rest einer Diazokomponente der Benzol- oder Naphthalinreihe sind und K₁ der Rest einer Kupplungskomponente der Naphthalinreihe ist; wobei D*, D₁* und K₁ bei Azofarbstoffen übliche Substituenten tragen können, insbesondere Hydroxy-, Amino-, Methyl, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome, und D*, D₁* und K₁ zusammen mindestens zwei Sulfogruppen, vorzugsweise drei oder vier Sulfogruppen, enthalten.
d) Farbstoffreste eines Formazanfarbstoffes, der Formel 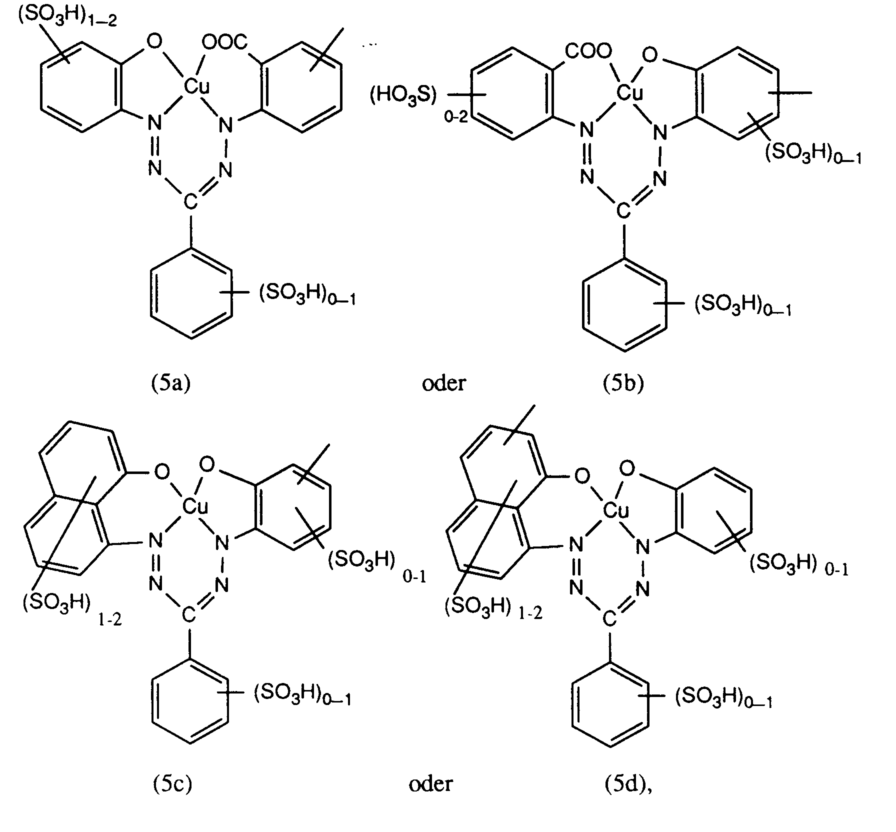 worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.
e) Farbstoffreste eines Anthrachinonfarbstoffes, der Formel 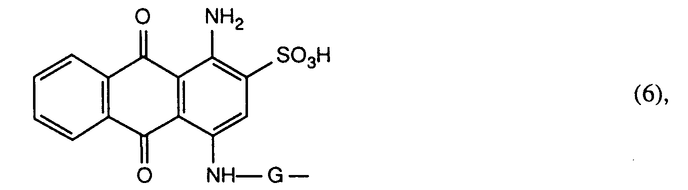 worin G ein Phenylen-, Cyclohexylen-, Phenylenmethylen- oder C₂-C₆-Alkylenrest, vorzugsweise ein Phenylen-, Ethylen- oder Propylenrest, ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.
f) Farbstoffreste eines Phthalocyaninfarbstoffes, der Formel 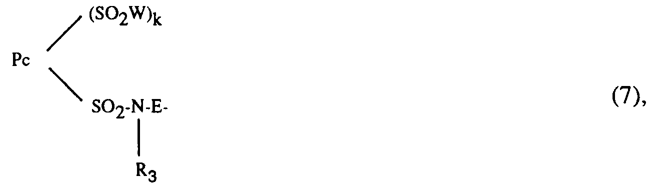 worin Pc der Rest eines Kupfer- oder Nickelphthalocyanins; W -OH und/oder - NR₄R₅; R₄ und R₅ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Ethylenrest; und k = 1, 2 oder 3 ist.
g) Farbstoffreste eines Dioxazinfarbstoffes, der Formel 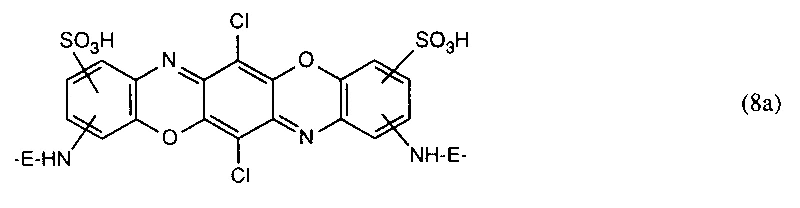 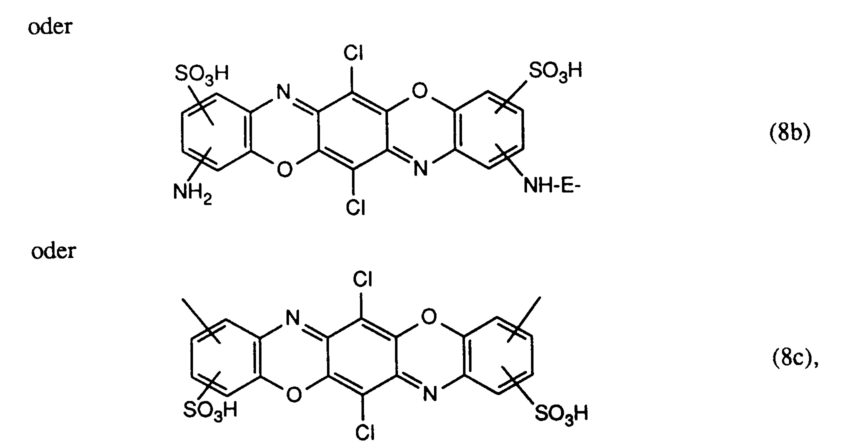 worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (8a), (8b) und (8c) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

D steht bevorzugt für einen Monoazo- oder Disazochromophorrest der Formel (3a), (3b), (3c), (4a) oder (4b) und besonders bevorzugt für einen Monoazochromophorrest.

Insbesonders bevorzugte Monoazochromophorreste D entsprechen der Formel 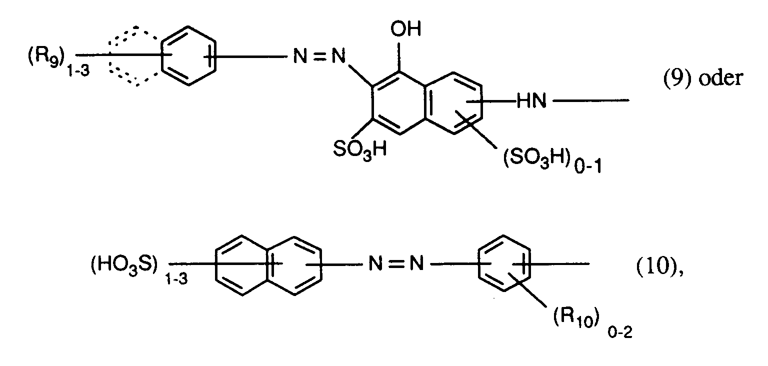 worin (R₉)₁₋₃ für 1 bis 3 gleiche oder verschiedene Reste aus der Gruppe Sulfo, Methyl, Methoxy, Acetylamino, Sulfamoyl und Rest der Formel -SO₂-Y oder -CONH-alk-SO₂-Y, worin alk und Y jeweils die zuvor angegebene Bedeutung haben, steht und (R₁₀)₀₋₂ 0 bis 2 gleiche oder verschiedene Reste aus der Gruppe Methyl, 2-Hydroxyethyl, Methoxy, Acetylamino, Propionylamino, Sulfo und Ureido bedeutet.

Besonders bevorzugte Monoazochromophorreste D entsprechen der Formel 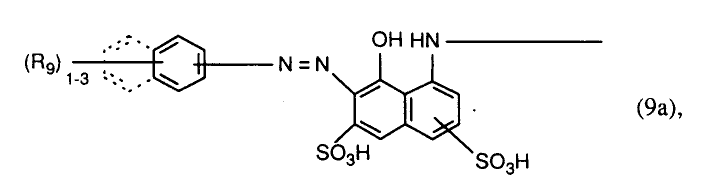 worin (R₉)₁₋₃ für 1 bis 3 gleiche oder verschiedene Reste aus der Gruppe Sulfo, Methyl, Methoxy und Rest der Formel -SO₂-Y, worin Y Vinyl oder β-Sulfatoethyl ist, steht.

Bevorzugte Disazochromophore D entsprechen der Formel 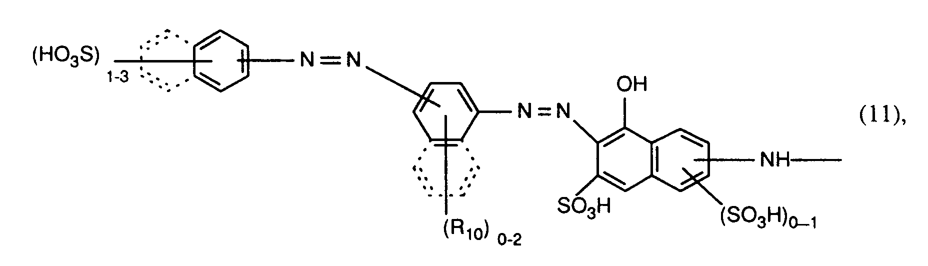 worin (R₁₀)₀₋₂ die zuvor angegebene Bedeutung hat.

Eine bevorzugte Ausführungsform der vorliegenden Erfindung betrifft Verbindungen der Formel 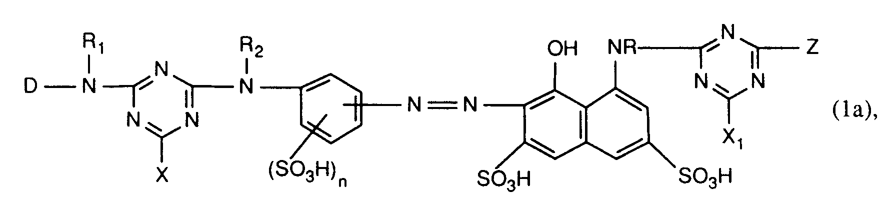 worin für D, R, R₁, R₂, X, X₁, Z, n und n₁ jeweils die zuvor angegebenen Bedeutungen und Bevorzugungen gelten.

Eine bevorzugte Untergruppe stellen Verbindungen der Formel (1a) dar, worin R₁ und R₂ unabhängig voneinander je Wasserstoff, Methyl oder Ethyl bedeuten, n für die Zahl 1 steht, X Fluor oder Chlor ist, X₁ Fluor, Chlor, Amino, N-C₁-C₄-Alkylamino, das im Alkylteil unsubstituiert oder durch Hydroxy, Sulfato oder Sulfo substituiert ist, Morpholino oder für Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, bedeutet, Z C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen Reaktivrest der zuvor angegebenen Formeln (2a) bis (2f), worin W eine Gruppe der Formel -CONH- oder -NHCO-, R₆, R₇ und R₈ je Wasserstoff, B der Rest -O- oder -NH- , alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und m die Zahl 0 sind, ist und D einen Rest der zuvor angegebenen Formel (9) bedeutet.

Eine besonders bevorzugte Untergruppe stellen Verbindungen der Formel (1a) dar, worin R₁ und R₂ je Wasserstoff bedeuten, n für die Zahl 1 steht, X Fluor oder Chlor ist, X₁ Fluor, Chlor oder Morpholino bedeutet, Z Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen faserreaktiven Rest der Formel 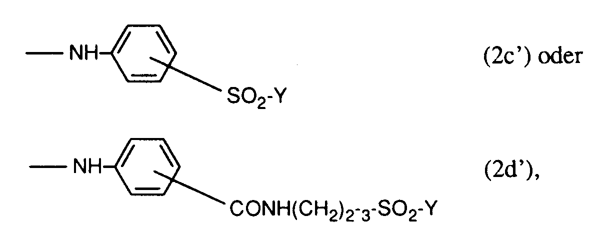 worin Y Vinyl oder β-Sulfatoethyl ist, bedeutet und D einen Rest der zuvor angegebenen Formel (9a) bedeutet.

Eine weitere bevorzugte Ausführungsform der vorliegenden Erfindung betrifft Verbindungen der Formel 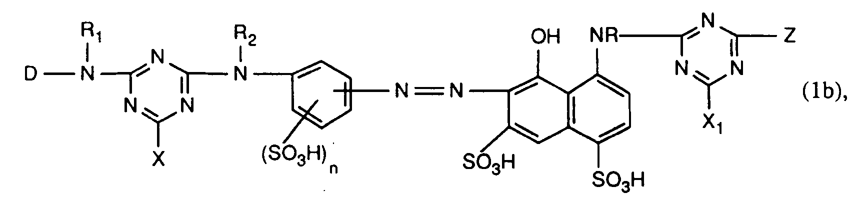 worin für D, R, R₁, R₂, X, X₁, Z, n und n₁ jeweils die zuvor angegebenen Bedeutungen und Bevorzugungen gelten.

Eine weitere bevorzugte Ausführungsform der vorliegenden Erfindung betrifft Verbindungen der Formel 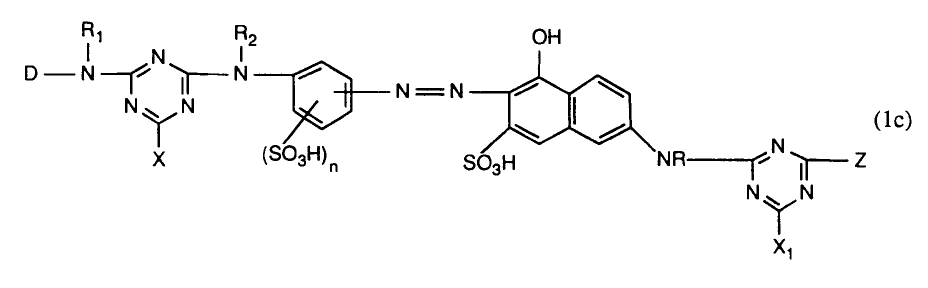 worin für D, R, R₁, R₂, X, X₁, Z, n und n₁ jeweils die zuvor angegebenen Bedeutungen und Bevorzugungen gelten.

Die Verbindungen der Formel (1) weisen mindestens zwei und vorzugsweise vier bis acht permanente Sulfo- oder Sulfatogruppen, d.h. Sulfo- oder Sulfatogruppen, welche bei der Reaktion des Reaktivfarbstoffes mit dem Fasermaterial nicht abgespalten werden, auf; diese können jeweils in Form der freien Säure oder vorzugsweise in Salzform, z.B. als Na-, Li-, K- oder Ammoniumsalz, vorliegen. Die Verbindungen der Formel (1) können auch als Mischsalz, z.B. als Na/Li- oder Na/Li/Ammoniumsalz, vorliegen.

Die Verbindungen der Formel (1) können in an sich bekannter Weise hergestellt werden, z.B. indem man in etwa 1 Aequivalent eines organischen Farbstoffes der Formel

D-NHR₁ (12)

oder ein Farbstoffvorprodukt, in etwa 1 Aequivalent 2,4,6-Trifluor-s-triazin (Cyanurfluorid) oder 2,4,6-Trichlor-s-triazin (Cyanurchlorid), in etwa 1 Aequivalent der Verbindung der Formel 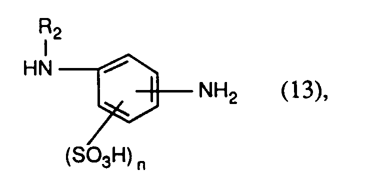 in etwa 1 Aequivalent der Verbindung der Formel 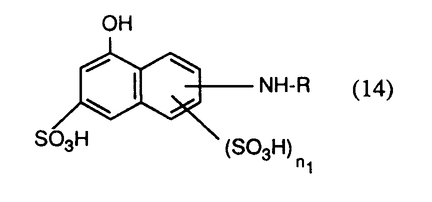 und in etwa 1 Aequivalent einer Verbindung der Formel 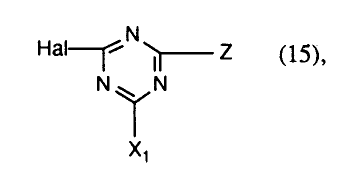 worin D, R, R₁, R₂, X, X₁, Z, n und n₁ jeweils die zuvor angegebene Bedeutung haben und Hal Halogen, vorzugsweise Fluor oder Chlor, bedeutet,
durch Diazotierung und Kupplung in beliebiger Reihenfolge miteinander umsetzt, oder, im Fall von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten sich vorteilhafterweise nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist. Da unter bestimmten Voraussetzungen Hydrolyse eines Halogentriazinylrestes eintritt, muss ein Zwischenprodukt, welches Acetylaminogruppen enthält, zwecks Abspaltung der Acetylgruppen verseift werden, bevor mit einem Halogentriazin kondensiert wird.

Eine bevorzugte Variante zur Herstellung der Verbindungen der Formel (1) betrifft die Herstellung einer Verbindung der Formel 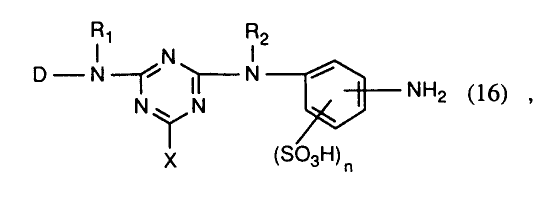 worin D, R₁, R₂, X und n jeweils die zuvor angegebene Bedeutung haben, Diazotierung dieser Verbindung und Kupplung mit einer Verbindung der Formel 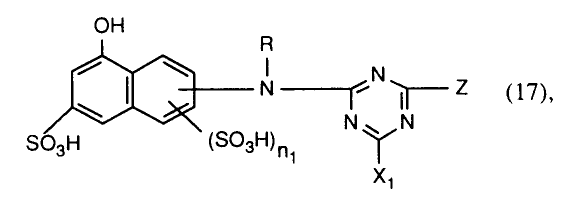 worin R, X₁, Z und n₁ jeweils die zuvor angegebene Bedeutung haben.

Die Verbindungen der Formeln (16) und (17) sind an sich bekannt oder können nach an sich bekannten Methoden erhalten werden.

Gegenstand der Erfindung ist ferner ein Verfahren zum Färben und Bedrucken von cellulosehaltigen Fasermaterialien mit den erfindungsgemässen Farbstoffen der Formel 1. Als Fasermaterialien kommen beispielsweise die natürlichen Cellulosefasern, wie Baumwolle, Leinen und Hanf, sowie Zellstoff und regenerierte Cellulose in Betracht. Die Farbstoffe sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Die Farbstoffe zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Es ergeben sich gut reproduzierbare, egale Färbungen. Die Farbstoffe der Formel (1) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit und eine sehr gute Chlorbadewasserechtheit.

Die Farbstoffe der Formel (1) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze, das Salz des Triäthanolamins oder auch Mischsalze, z.B. Na/Li oder Na/NH₄/Li, genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt.

Beispiel 1: Zu einer neutralen Lösung von 53 Teilen 7-(2-Acetylamino-4-aminophenyl-azo)-naphthalin-1,3,6-trisulfonsäure und 5 Teilen Dinatriumhydrogenphosphat in 500 Teilen Wasser werden bei einer Temperatur von ca. 0-2°C 14 Teile Cyanurfluorid getropft und dabei der pH-Wert durch Zugabe von Natriumhydroxidlösung konstant gehalten. Nach beendeter Reaktion gibt man eine neutrale Lösung von 19 Teilen 1,3-Diaminobenzol-4-sulfonsäure in 100 Teilen Wasser zu, hält den pH-Wert durch Zugabe von Natriumhydroxidlösung bei 5,5 und lässt auf Raumtemperatur erwärmen. Die erhaltene Lösung wird auf ca. 0°C gekühlt, mit 25 Teilen 32%ige Salzsäure und 7 Teilen Natriumnitrit versetzt und ca. 1 Stunde gerührt. Man zerstört dann überflüssiges Nitrit mit wenig Sulfaminsäure und tropft die erhaltene Suspension des Diazoniumsalzes in eine neutrale, kalte, wässrige Lösung von 53 Teilen 1-(4-N-Ethyl-N-phenylamino-6-fluor-[1,3,5]-triazin-2-yl-amino)-8-hydroxynaphthalin-3,6-disulfonsäure, wobei man den pH-Wert durch Zugabe von Natriumhydroxidlösung konstant hält. Man lässt auf Raumtemperatur erwärmen, befreit die Lösung dialytisch von Salz und dampft den Farbstoff der Formel 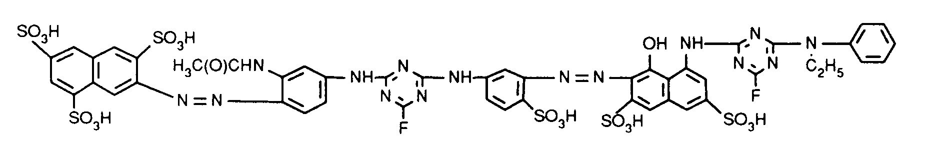 ein. Das erhaltene Pulver färbt Cellulose in einer brillanten orangen Nuance mit guten Allgemeinechtheiten.

Beispiel 2: Zu einer neutralen Lösung von 32 Teilen 1-Amino-8-hydroxynaphthalin-3,6-disulfonsäure und 5 Teilen Dinatriumhydrogenphosphat in 500 Teilen Wasser werden bei einer Temperatur von ca. 0-2°C 14 Teile Cyanurfluorid getropft und dabei der pH-Wert durch Zugabe von Natriumhydroxidlösung konstant gehalten. Nach beendeter Reaktion gibt man eine neutrale Lösung von 19 Teilen 1,3-Diaminobenzol-4-sulfonsäure in 100 Teilen Wasser zu, hält den pH-Wert durch Zugabe von Natriumhydroxidlösung bei 5,5 und lässt auf Raumtemperatur erwärmen (Lösung 1).

In eine neutrale Lösung von 30 Teilen 2-Aminonaphthalin-1,5-disulfonsäure in 300 ml Wasser gibt man bei ca. 0°C 25 Teile 32%ige Salzsäure und 7 Teile Natriumnitrit und lässt ca. 1 Stunde rühren. Man zerstört dann überflüssiges Nitrit mit wenig Sulfaminsäure und tropft die erhaltene Suspension des Diazoniumsalzes in die gekühlte Lösung 1, wobei man den pH-Wert durch Zugabe von Natriumhydroxidlösung konstant hält (Lösung 2).

Die kalte Lösung 2 wird mit 25 Teilen 32%ige Salzsäure und 7 Teilen Natriumnitrit versetzt und ca. 1 Stunde rühren gelassen. Nach Zerstörung des Nitritüberschusses mit Sulfaminsäure tropft man die Suspension des Diazoniumsalzes in eine gekühlte wässrige Lösung von 53 Teilen 1-(4-N-Methyl-N-phenylamino-6-fluor-[1,3,5]-triazin-2-yl-amino)-8-hydroxynaphthalin-3,6-disulfonsäure, wobei man den pH-Wert durch Zugabe von Natriumhydroxidlösung konstant hält. Man lässt auf Raumtemperatur erwärmen, befreit die Lösung dialytisch von Salz und dampft den Farbstoff der Formel 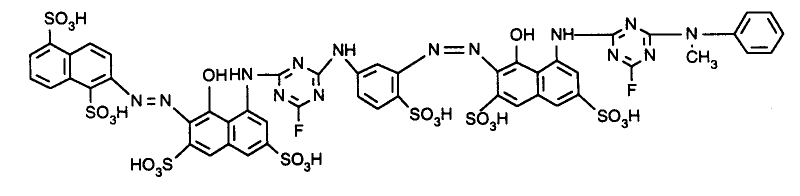 ein. Das erhaltene Pulver färbt Cellulose in einer brillanten roten Nuance mit guten Allgemeinechtheiten.

Beispiele 3-18: Analog wie in den Beispielen 1 und 2 beschrieben lassen sich die Verbindungen der allgemeinen Formel 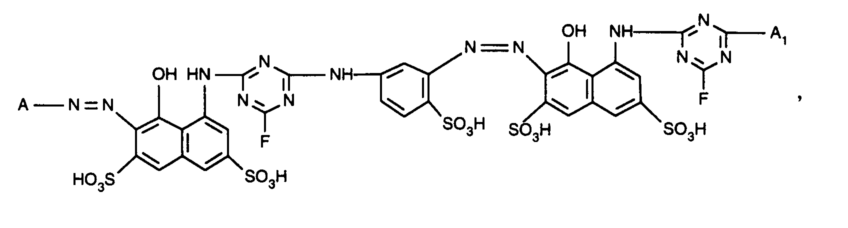 worin A und A₁ die in der folgenden Tabelle genannten Bedeutungen haben, herstellen, welche Baumwolle jeweils in einer roten Nuance mit guten Allgemeinechtheiten färben.

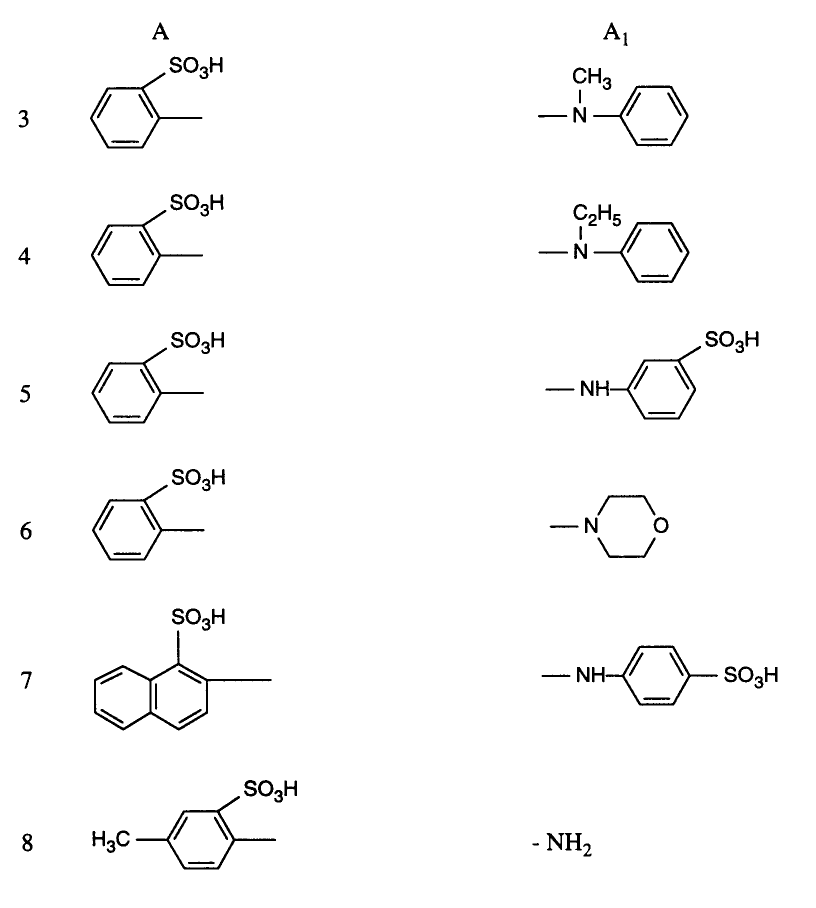

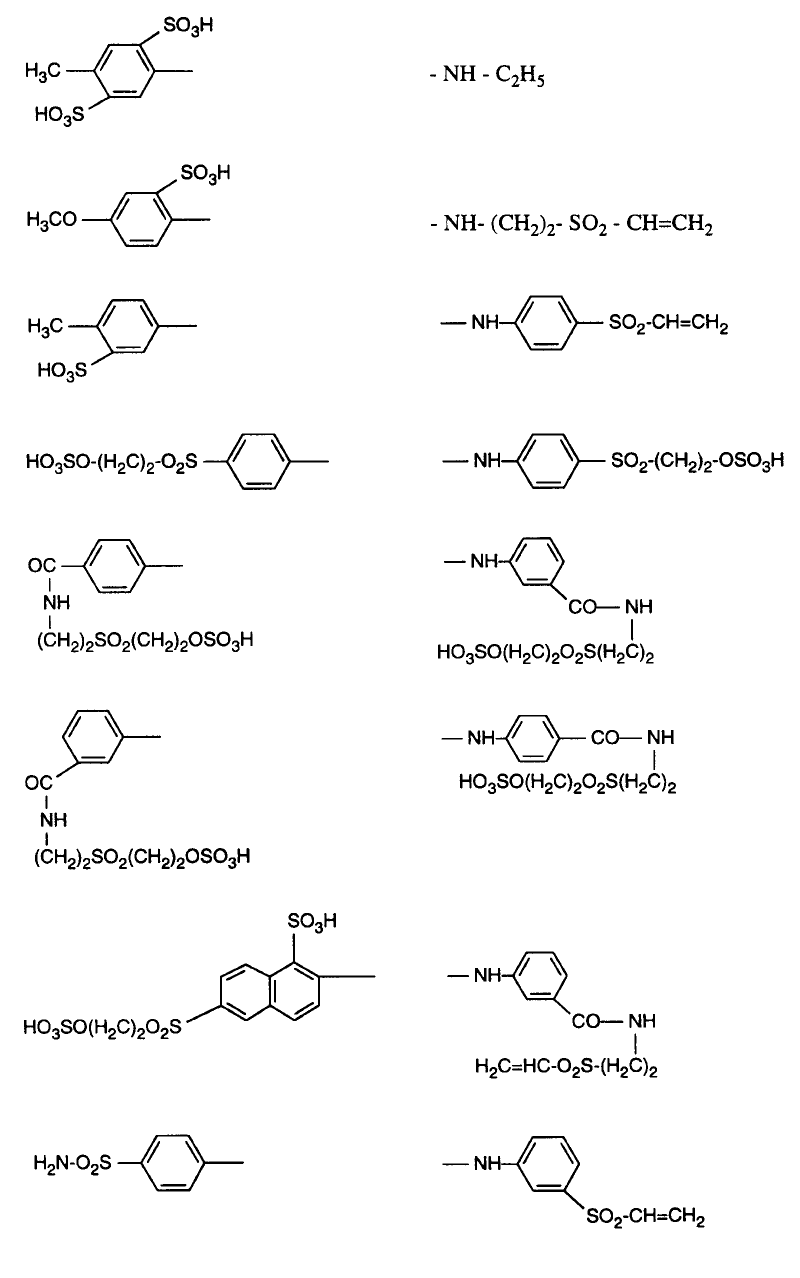

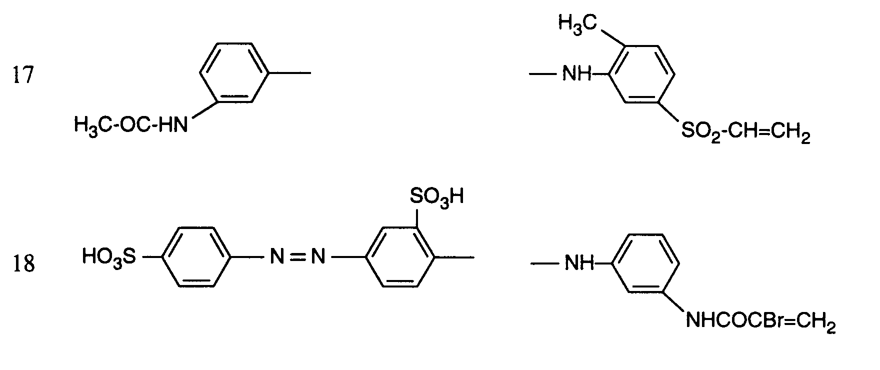

Beispiele 19-34: Analog wie in den Beispielen 1 und 2 beschrieben lassen sich die Verbindungen der allgemeinen Formel 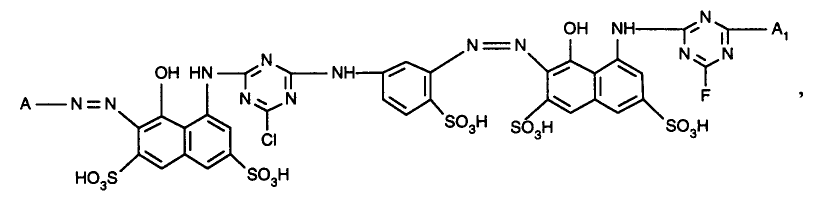 worin A und A₁ die in der folgenden Tabelle genannten Bedeutungen haben, herstellen, welche Baumwolle jeweils in einer roten Nuance mit guten Allgemeinechtheiten färben.

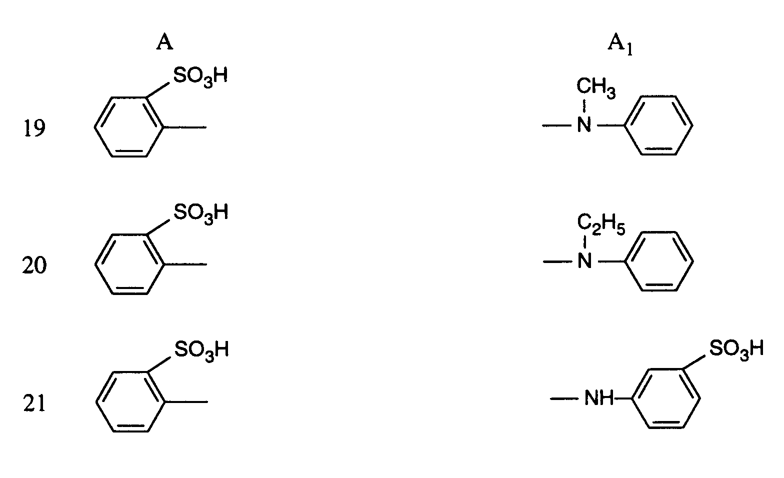

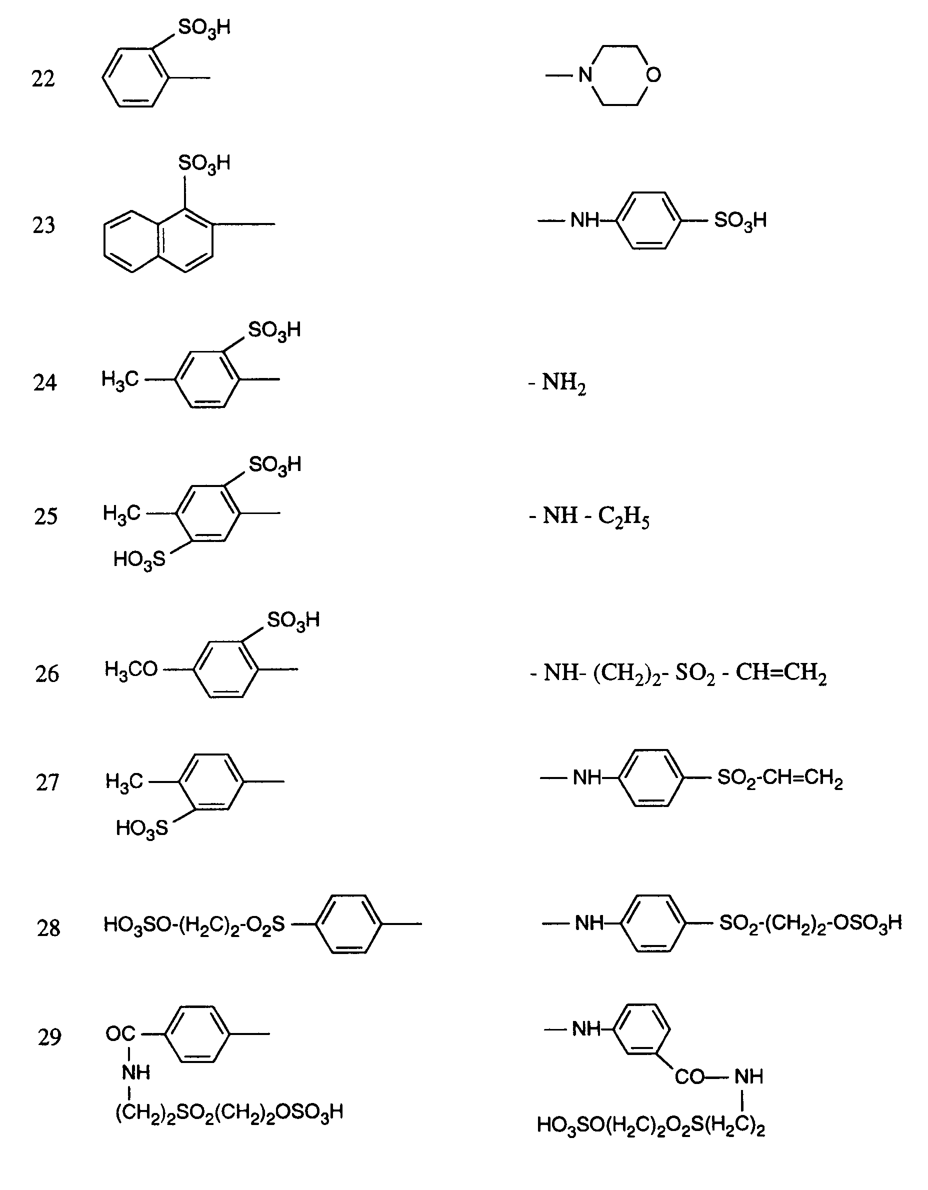

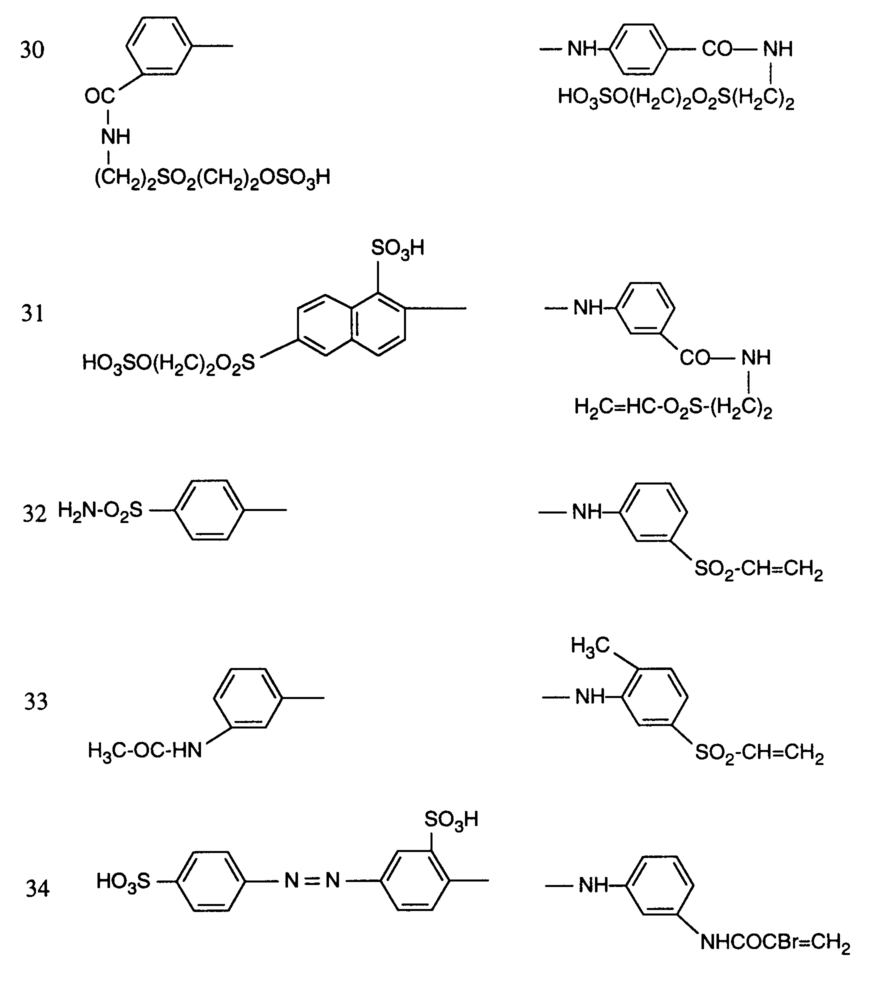

Beispiele 35-50: Analog wie in den Beispielen 1 und 2 beschrieben lassen sich die Verbindungen der allgemeinen Formel 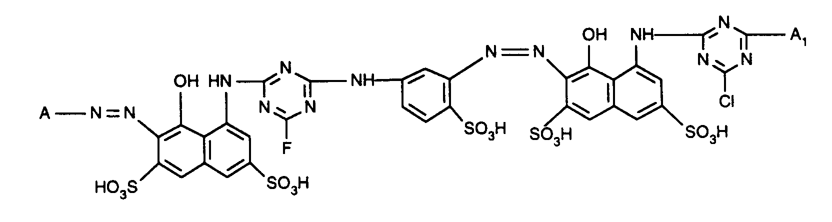 worin A und A₁ die in der folgenden Tabelle genannten Bedeutungen haben, herstellen, welche Baumwolle jeweils in einer roten Nuance mit guten Allgemeinechtheiten färben.

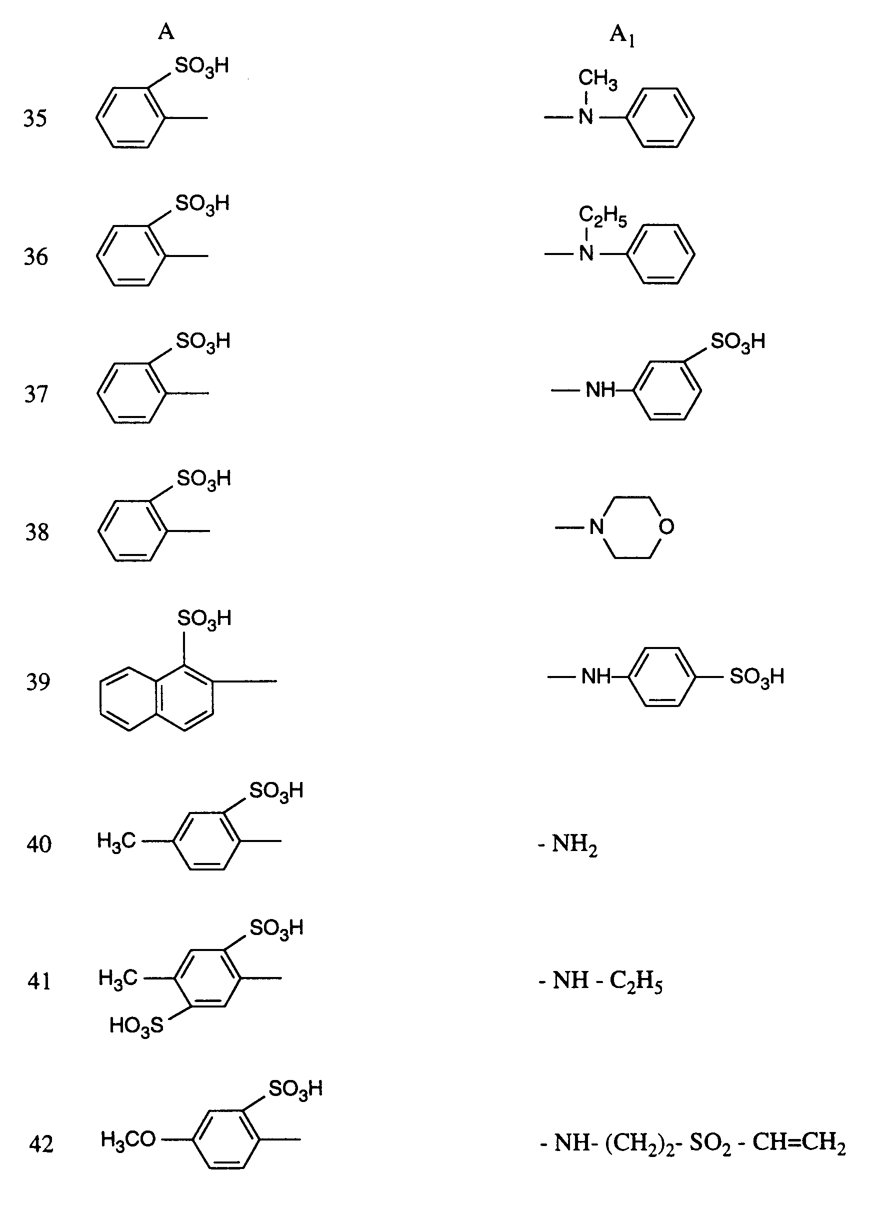

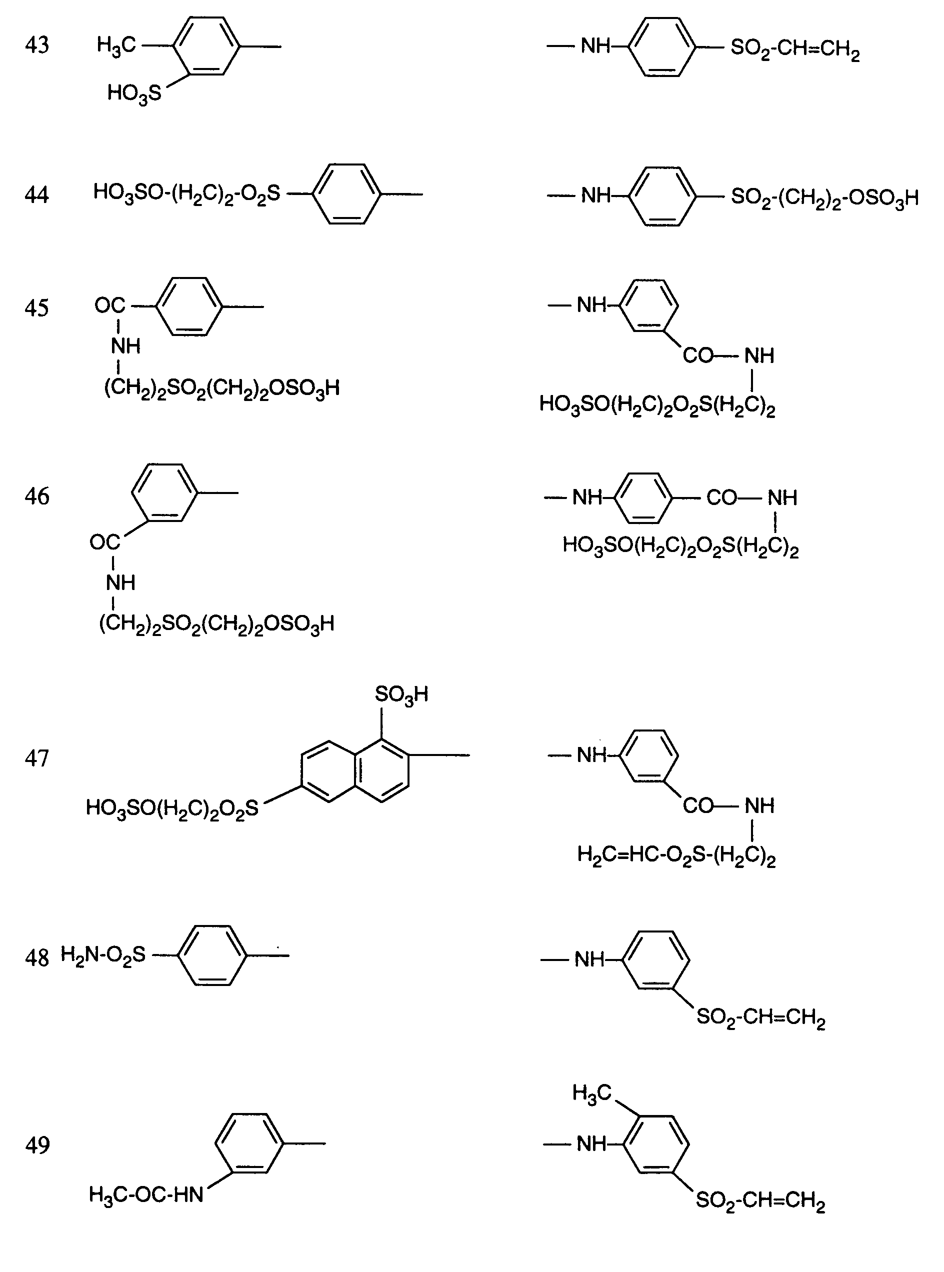

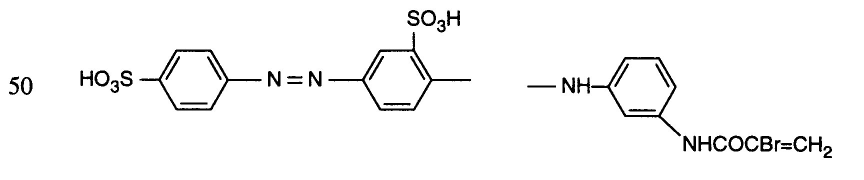

Beispiele 51-66: Analog wie in den Beispielen 1 und 2 beschrieben lassen sich die Verbindungen der allgemeinen Formel 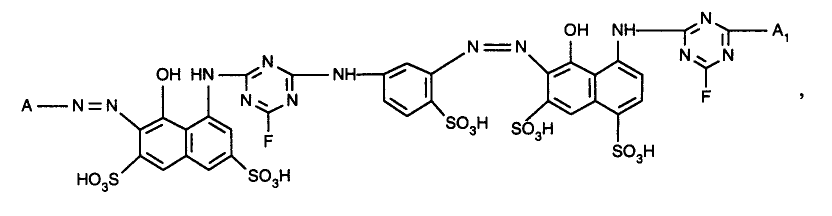 worin A und A₁ die in der folgenden Tabelle genannten Bedeutungen haben, herstellen, welche Baumwolle jeweils in einer roten Nuance mit guten Allgemeinechtheiten färben.

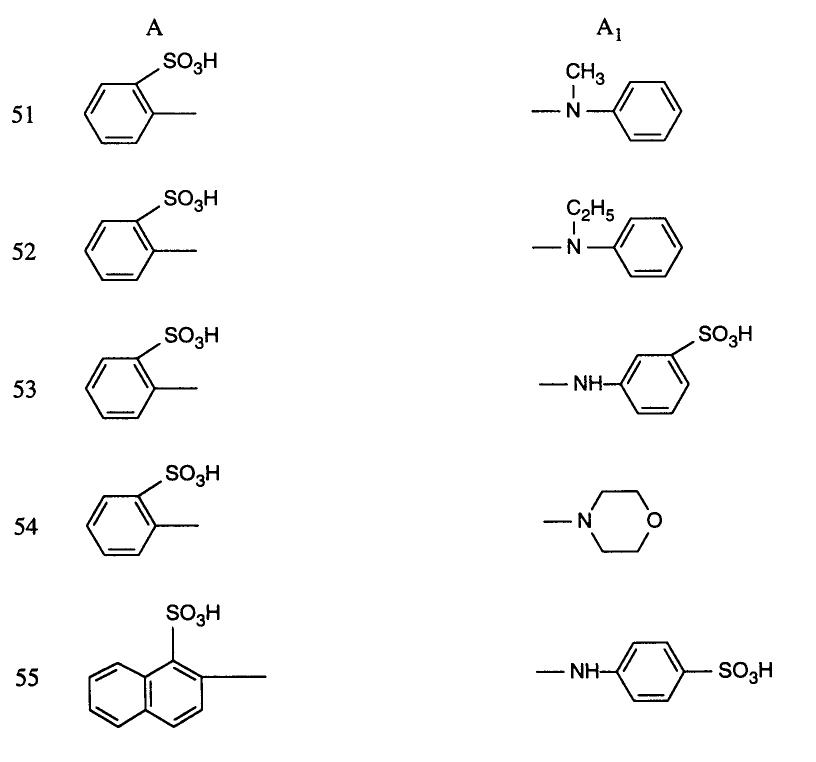

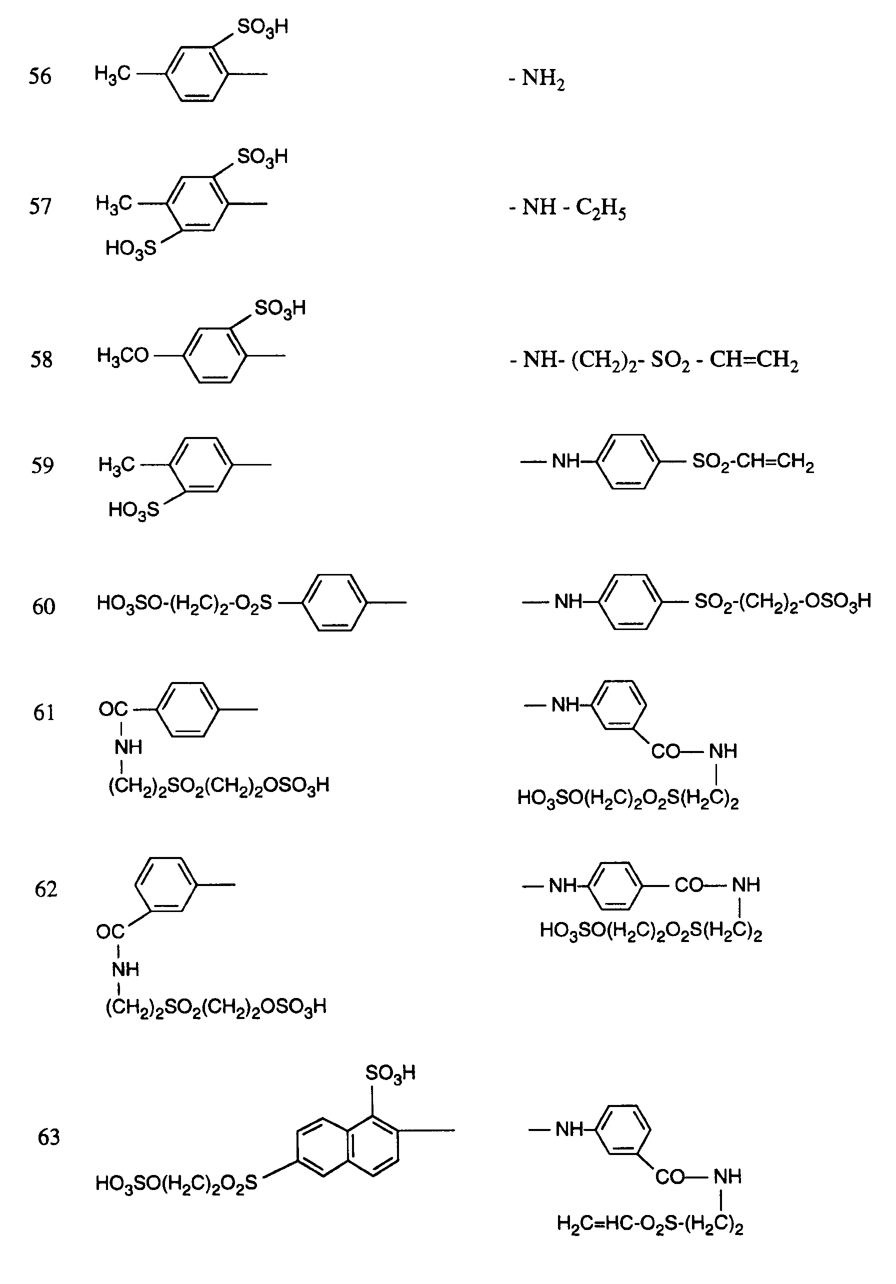

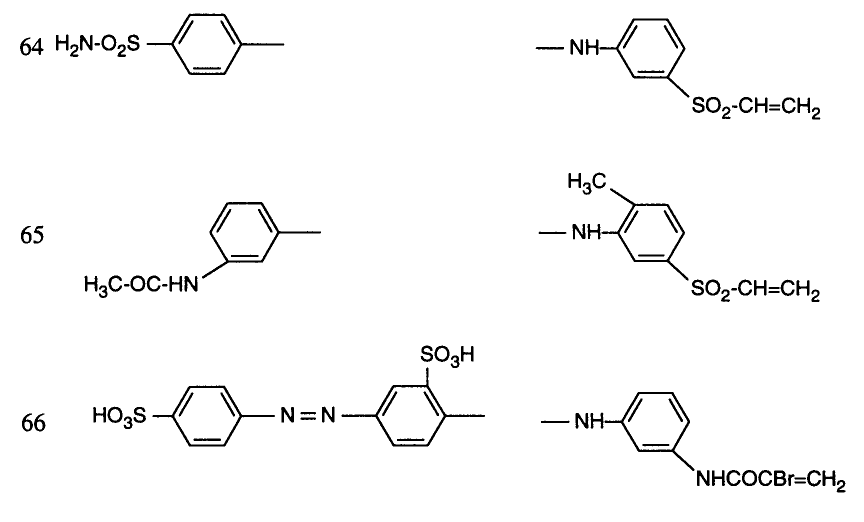

Beispiele 67-82: Analog wie in den Beispielen 1 und 2 beschrieben lassen sich die Verbindungen der allgemeinen Formel 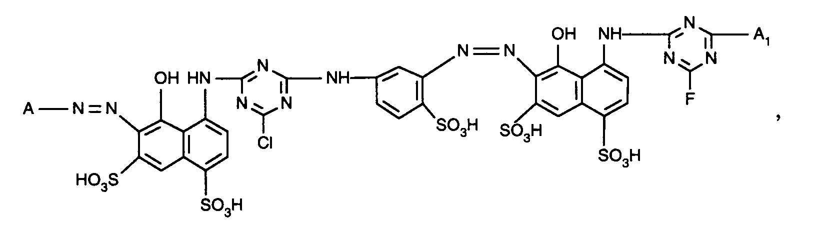 worin A und A₁ die in der folgenden Tabelle genannten Bedeutungen haben, herstellen, welche Baumwolle jeweils in einer roten Nuance mit guten Allgemeinechtheiten färben.

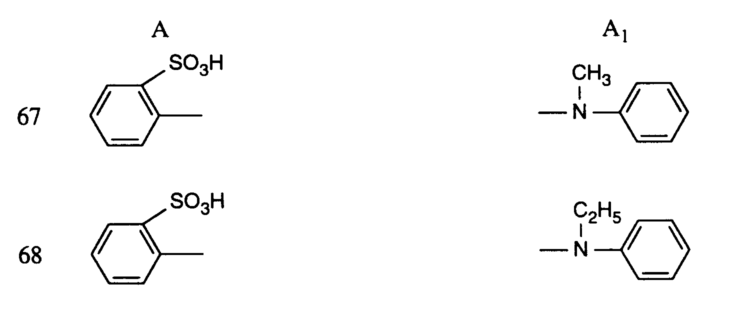

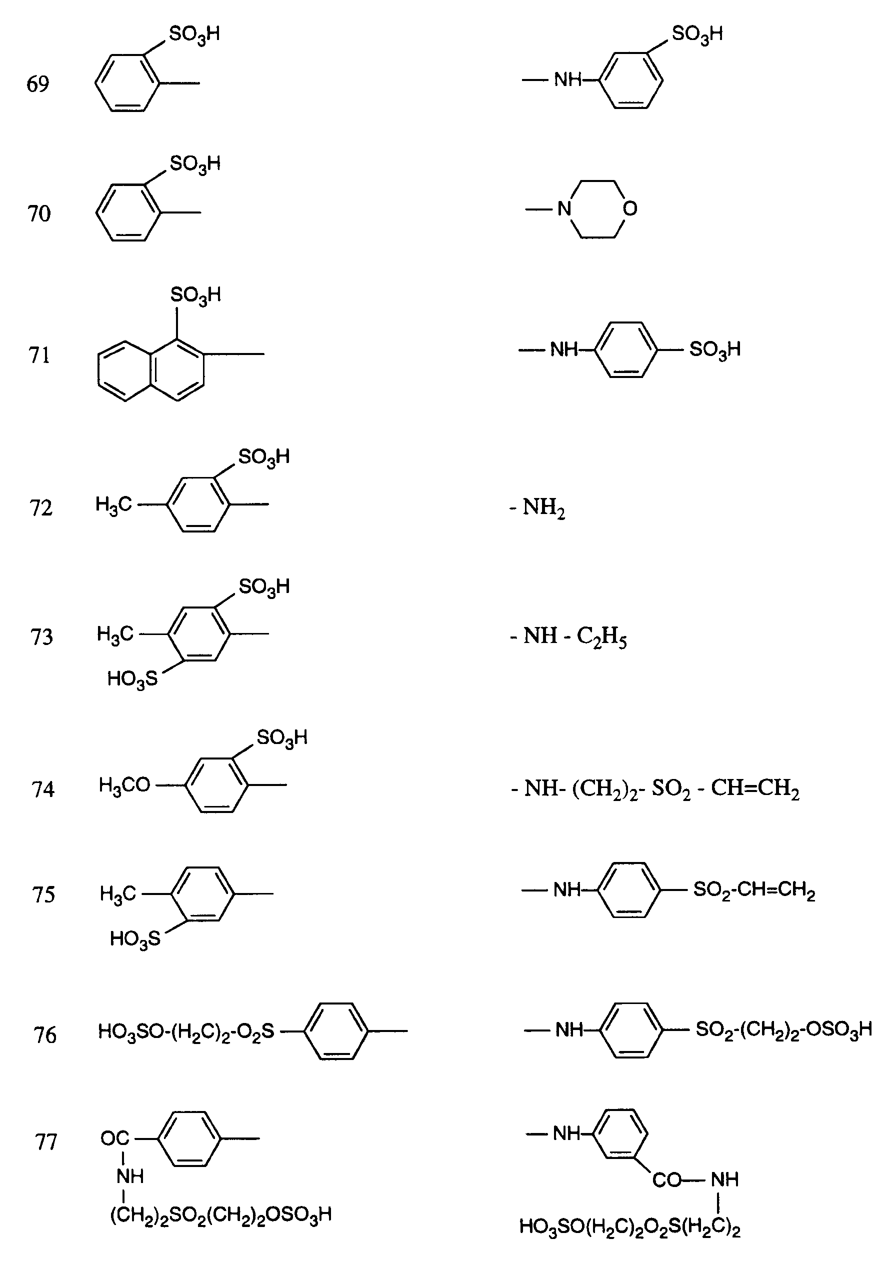

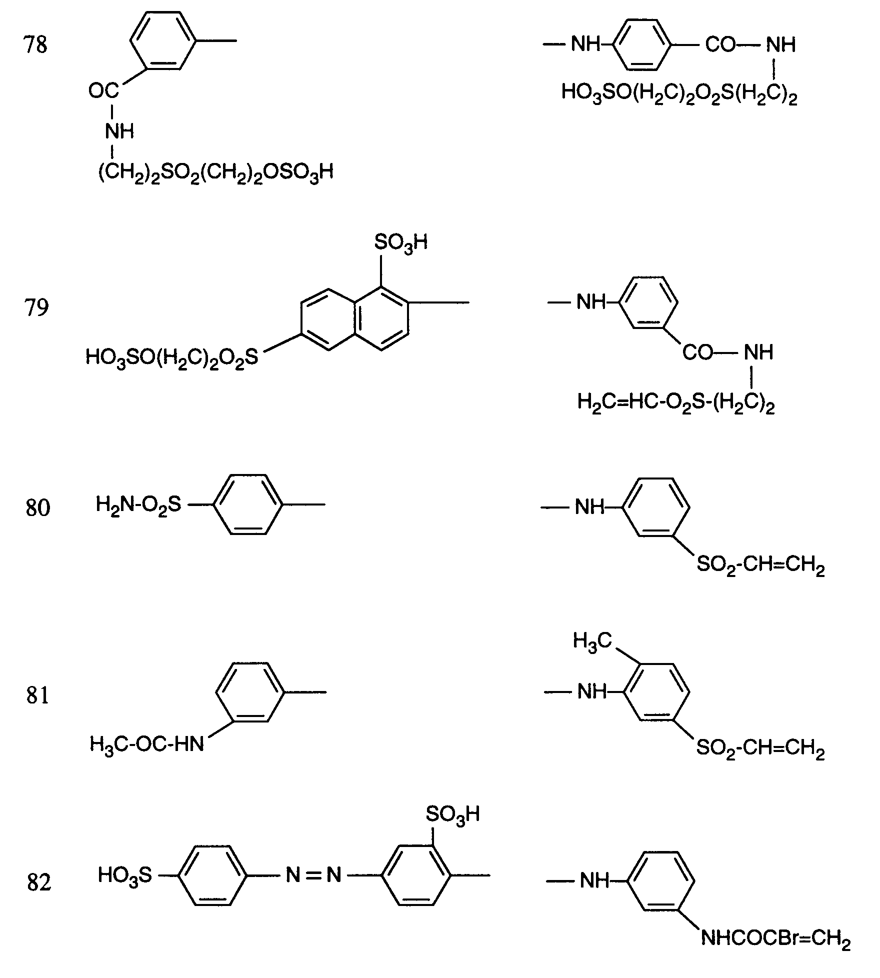

Beispiele 83-95: Analog wie in den Beispielen 1 und 2 beschrieben lassen sich die Verbindungen der allgemeinen Formel 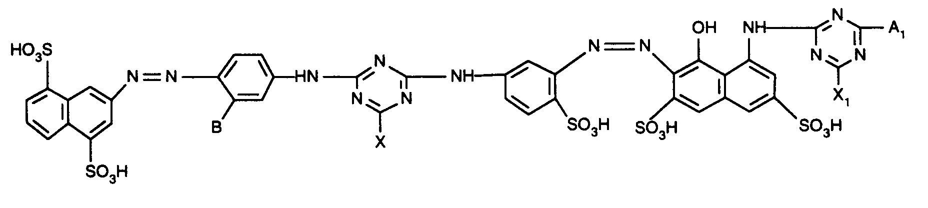 worin A₁, B, X und X₁ die in der folgenden Tabelle genannten Bedeutungen haben, herstellen, welche Baumwolle jeweils mit guten Allgemeinechtheiten färben.

| Beispiel Nr. | X | X₁ | B | A₁ |
|---|---|---|---|---|
| 83 | F | F | H | N-Methyl-N-phenylamino |
| 84 | F | F | -NHCOCH₃ | 3-Sulfophenylamino |
| 85 | F | F | -NHCOC₂H₅ | Morpholino |
| 86 | F | F | -CH₃ | 4-β-Sulfatoethyl-sulfonylphenylamino |
| 87 | F | F | -NHCOCH₃ | 3-β-Sulfatoethyl-sulfonylphenylamino |
| 88 | F | F | H | N-Ethyl-N-phenylamino |
| 89 | F | F | -CH₃ | 3-[2-(β-Sulfatoethyl-sulfonyl)-ethylaminocarbonyl]-phenylamino |
| 90 | F | F | -NHCOCH₃ | 4-[2-(β-Sulfatoethyl-sulfonyl)-ethylaminocarbonyl]-phenylamino |
| 91 | Cl | F | -NHCOC₂H₅ | 3-Sulfophenylamino |
| 92 | Cl | F | -CH₃ | Morpholino |
| 93 | Cl | F | -NHCOCH₃ | N-Methyl-N-phenylamino |
| 94 | Cl | F | H | 3-β-Sulfatoethyl-sulfonylphenylamino |
| 95 | Cl | F | -NHCOCH₃ | 4-β-Sulfatoethyl-sulfonylphenylamino |

Beispiele 96-108: Analog wie in den Beispielen 1 und 2 beschrieben lassen sich die Verbindungen der allgemeinen Formel 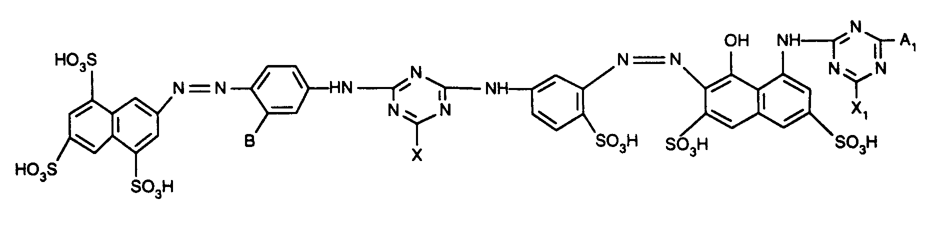 worin A₁, B, X und X₁ die in der folgenden Tabelle genannten Bedeutungen haben, herstellen, welche Baumwolle jeweils mit guten Allgemeinechtheiten färben.

| Beispiel Nr. | X | X₁ | B | A₁ |
|---|---|---|---|---|
| 96 | F | F | H | N-Methyl-N-phenylamino |
| 97 | F | F | -NHCOCH₃ | 3-Sulfophenylamino |
| 98 | F | F | -NHCOC₂H₅ | Morpholino |
| 99 | F | F | -CH₃ | 4-β-Sulfatoethyl-sulfonylphenylamino |
| 100 | F | F | -NHCOCH₃ | 3-β-Sulfatoethyl-sulfonylphenylamino |
| 101 | F | F | H | N-Ethyl-N-phenylamino |
| 102 | F | F | -CH₃ | 3-[2-(β-Sulfatoethyl-sulfonyl)-ethylaminocarbonyl]-phenylamino |
| 103 | F | F | -NHCOCH₃ | 4-[2-(β-Sulfatoethyl-sulfonyl)-ethylaminocarbonyl]-phenylamino |
| 104 | Cl | F | -NHCOC₂H₅ | 3-Sulfophenylamino |
| 105 | Cl | F | -CH₃ | Morpholino |
| 106 | Cl | F | -NHCOCH₃ | N-Methyl-N-phenylamino |
| 107 | Cl | F | H | 3-β-Sulfatoethyl-sulfonylphenylamino |
| 108 | Cl | F | -NHCOCH₃ | 4-β-Sulfatoethyl-sulfonylphenylamino |

Beispiele 109-121: Analog wie in den Beispielen 1 und 2 beschrieben lassen sich die Verbindungen der allgemeinen Formel 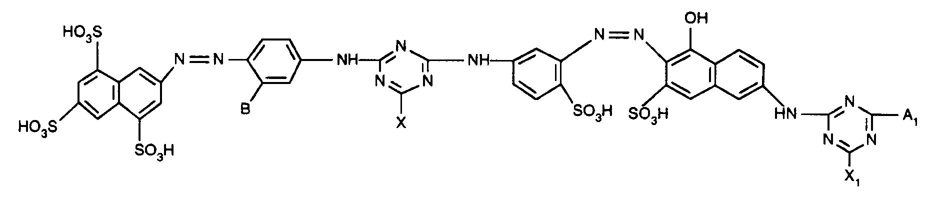 worin A₁, B, X und X₁ die in der folgenden Tabelle genannten Bedeutungen haben, herstellen, welche Baumwolle jeweils mit guten Allgemeinechtheiten färben.

| Beispiel Nr. | X | X₁ | B | A₁ |
|---|---|---|---|---|
| 109 | F | F | H | N-Methyl-N-phenylamino |
| 110 | F | F | -NHCOCH₃ | 3-Sulfophenylamino |
| 111 | F | F | -NHCOC₂H₅ | Morpholino |
| 112 | F | F | -CH₃ | 4-β-Sulfatoethyl-sulfonylphenylamino |
| 113 | F | F | -NHCOCH₃ | 3-β-Sulfatoethyl-sulfonylphenylamino |
| 114 | F | F | H | N-Ethyl-N-phenylamino |
| 115 | F | F | -CH₃ | 3-[2-(β-Sulfatoethyl-sulfonyl)-ethylaminocarbonyl]-phenylamino |
| 116 | F | F | -NHCOCH₃ | 4-[2-(β-Sulfatoethyl-sulfonyl)-ethylaminocarbonyl]-phenylamino |
| 117 | Cl | F | -NHCOC₂H₅ | 3-Sulfophenylamino |
| 118 | Cl | F | -CH₃ | Morpholino |
| 119 | Cl | F | -NHCOCH₃ | N-Methyl-N-phenylamino |
| 120 | Cl | F | H | 3-β-Sulfatoethyl-sulfonylphenylamino |
| 121 | Cl | F | -NHCOCH₃ | 4-β-Sulfatoethyl-sulfonylphenylamino |

Beispiele 122-134: Analog wie in den Beispielen 1 und 2 beschrieben lassen sich die Verbindungen der allgemeinen Formel 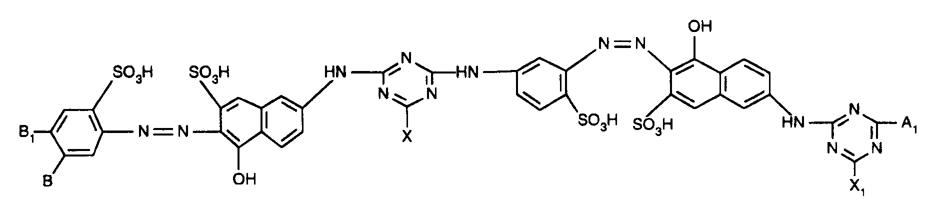 worin A₁, B, B₁, X und X₁ die in der folgenden Tabelle genannten Bedeutungen haben, herstellen, welche Baumwolle jeweils mit guten Allgemeinechtheiten färben.

| Beispiel Nr. | X | X₁ | B₁ | B | A₁ |
|---|---|---|---|---|---|
| 122 | F | F | H | H | N-Methyl-N-phenylamino |
| 123 | F | F | CH₃ | SO₃H | 3-Sulfophenylamino |
| 124 | F | F | OCH₃ | H | Morpholino |
| 125 | F | F | H | H | 4-β-Sulfatoethyl-sulfonylphenylamino |
| 126 | F | F | H | SO₃H | 3-β-Sulfatoethyl-sulfonylphenylamino |
| 127 | F | F | H | 1,5-disulfonaphthyl-2-azo | N-Ethyl-N-phenylamino |
| 128 | F | F | CH₃ | H | 3-[2-(β-Sulfatoethyl-sulfonyl)-ethylaminocarbonyl]-phenylamino |
| 129 | F | F | OCH₃ | H | 4-[2-(β-Sulfatoethyl-sulfonyl)-ethylaminocarbonyl]-phenylamino |
| 130 | Cl | F | H | H | 3-Sulfophenylamino |
| 131 | Cl | F | H | SO₃H | Morpholino |
| 132 | Cl | F | OCH₃ | H | N-Methyl-N-phenylamino |
| 133 | Cl | F | H | H | 3-β-Sulfatoethyl-sulfonylphenylamino |
| 134 | Cl | F | CH₃ | SO₃H | 4-β-Sulfatoethyl-sulfonylphenylamino |

Beispiele 135a bis 135e: Analog wie in den Beispielen 1 und 2 beschrieben lassen sich die Verbindungen der allgemeinen Formel 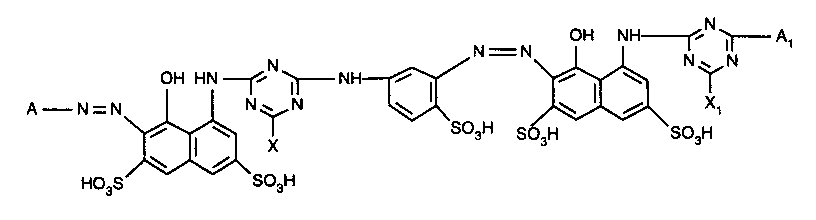 worin A, A₁, X und X₁ die in der Tabelle angegebenen Bedeutungen haben, herstellen, welche Baumwolle jeweils mit guten Allgemeinechtheiten färben.

| Beispiel Nr. | X | X₁ | A | A₁ |
|---|---|---|---|---|
| 135a | Cl | F | 2-Sulfophenyl | N-Methyl-N-phenylamino |
| 135b | Cl | F | 1,5-Disulfo-2-naphthyl | N-Methyl-N-phenylamino |
| 135c | Cl | F | 1-Sulfo-2-naphthyl | N-Methyl-N-phenylamino |
| 135d | Cl | Cl | 4-Sulfatoethyl-sulfonylphenyl | 3-Sulfophenylamino |
| 135e | Cl | Morpholino | 4-Sulfatoethyl-sulfonylphenyl | Morpholino |

Beispiel 136:
2 Teile Farbstoff gemäss Beispiel 1 werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 137:
2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 138:
8 Teile des gemäss Beispiel 1 erhaltenen Farbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird die orange gefärbte Ware gespült, während einer Viertelstunde mit einem nicht-ionogenen Waschmittel kochend geseift, nochmals gespült und getrocknet. Die erhaltene Ware zeichnet sich durch sehr gute Echtheiten aus.

Beispiel 139:
4 Teile des gemäss Beispiel 1 erhaltenen Farbstoffes werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die marineblau gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 140:
6 Teile des gemäss Beispiel 1 erhaltenen Farbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 141:
2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die orange Färbung während 30 Sekunden bei 100 bis 102°C, spült, seift während einer Viertelstunde in einer 0,3%igen kochenden Lösung eines nichtionogenen Waschmittels, spült und trocknet. Die erhaltene Ware zeichnet sich durch sehr gute Echtheiten aus.

Beispiel 142: 3 Teile des gemäss Beispiel 1 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das orange bedruckte Gewebe wird dann gespült, gegebenenfalls kochend geseift und nochmals gespült, und anschliessend getrocknet. Die erhaltene Ware zeichnet sich durch sehr gute Echtheiten aus.

Beispiel 143:
5 Teile des gemäss Beispiel 1 erhaltenen Farbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen orange bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Die erhaltene Ware zeichnet sich durch sehr gute Echtheiten aus.

## Patentansprüche

1. Reaktivfarbstoffe der Formel 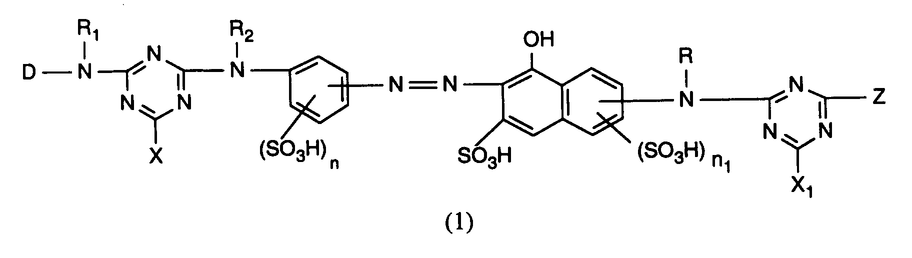 worin
D der Rest eines Monoazo-, Polyazo-, Metallkomplexazo-, Anthrachinon-, Phthalocyanin-, Formazan- oder Dioxazinchromophors ist,
R, R₁ und R₂ unabhängig voneinander je Wasserstoff oder gegebenenfalls durch Halogen, Hydroxy, Cyano, C₁-C₄-Alkoxy, C₁-C₄-Alkoxycarbonyl, Carboxy, Sulfamoyl, Sulfo oder Sulfato substituiertes C₁-C₄-Alkyl bedeuten,
X für Chlor, Fluor, Brom, 3-Carboxypyridin-1-yl oder 3-Carbamoylpyridin-1-yl steht,
X₁ und Z unabhängig voneinander je eine der für X genannten Bedeutungen haben oder für Hydroxy, C₁-C₄-Alkoxy, Phenoxy, C₁-C₄-Alkylthio, Morpholino, Amino, N-C₁-C₄-Alkylamino oder N,N-Di-C₁-C₄-Alkylamino, wobei das Alkyl gegebenenfalls durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl gegebenenfalls durch C₁-C₄-Alkyl, C₁-C₄-Alkoxy, C₂-C₄-Alkanoylamino, Carboxy, Sulfo oder Halogen substituiert ist oder für einen Reaktivrest der Formel 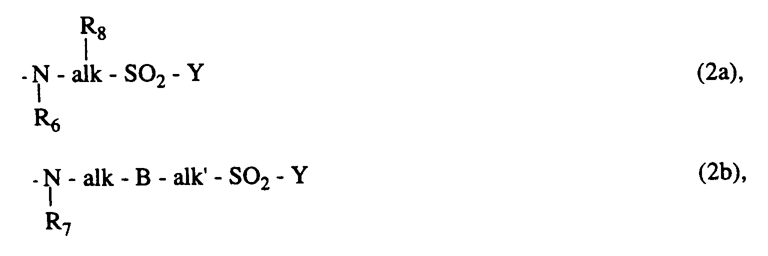 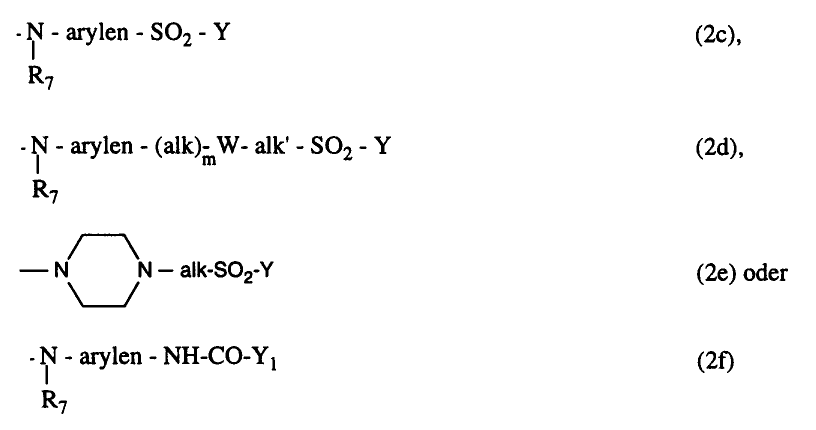 stehen,
R₆ Wasserstoff, gegebenenfalls durch Hydroxy, Sulfo, Sulfato, Carboxy oder Cyano substituiertes C₁-C₄-Alkyl oder einen Rest 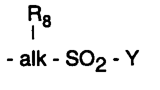 bedeutet,
R₇ für Wasserstoff oder C₁-C₄-Alkyl steht,
R₈ Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Y ist,
alk und alk' unabhängig voneinander C₁-C₆-Alkylen sind,
arylen einen unsubstituierten oder durch Sulfo, Carboxy, C₁-C₄-Alkyl, C₁-C₄-Alkoxy oder Halogen substituierten Phenylen- oder Naphthylenrest bedeutet
Y Vinyl oder ein Rest -CH₂-CH₂-U und U eine Abgangsgruppe ist,
Y₁ für eine Gruppe -CHX₂-CH₂X₂ oder -CX₂=CH₂ steht und X₂ Chlor oder Brom bedeutet,
B den Rest -O- oder -NR₇- bedeutet,
W für eine Gruppe -SO₂-NR₆-, -CONR₆- oder -NR₆CO- steht, und
m die Zahl 0 oder 1, n die Zahl 1 oder 2 und n₁ die Zahl 0 oder 1 bedeuten,
mit der Massgabe, dass
der Chromophor D keine faserreaktive Triazingruppe enthält, falls D ein 1-Amino-7-(5'-amino-2'-sulfophenylazo)-8-naphthol-3,6-disulfonsäure-, 1-Amino-7-(5'-amino-2'-sulfophenylazo)-8-naphthol-4,6-disulfonsäure- oder 2-Amino-6-(5'-amino-2'-sulfophenylazo)-5-naphthol-7-sulfonsäurerest ist.

2. Reaktivfarbstoffe gemäss Anspruch 1, dadurch gekennzeichnet, dass R, R₁ und R₂ unabhängig voneinander je Wasserstoff, Methyl oder Ethyl bedeuten.

3. Reaktivfarbstoffe gemäss Anspruch 1 oder 2, dadurch gekennzeichnet, dass X Chlor oder Fluor und X₁ Chlor, Fluor, Amino, N-C₁-C₄-Alkylamino, das im Alkylteil unsubstituiert oder durch Hydroxy, Sulfato oder Sulfo substituiert ist, Morpholino oder für Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, bedeuten.

4. Reaktivfarbstoffe gemäss Anspruch 1 der Formel (1), worin X₁ Chlor, Fluor, Brom, 3-Carboxypyridin-1-yl oder 3-Carbamoylpyridin-1-yl bedeutet.

5. Reaktivfarbstoffe gemäss einem der Ansprüche 1 bis 4, dadurch gekennzeichnet, dass D für den Rest eines Monoazo- oder Disazochromophors steht.

6. Reaktivfarbstoffe gemäss einem der Ansprüche 1 bis 5, dadurch gekennzeichnet, dass D für einen Monoazochromophor der Formel 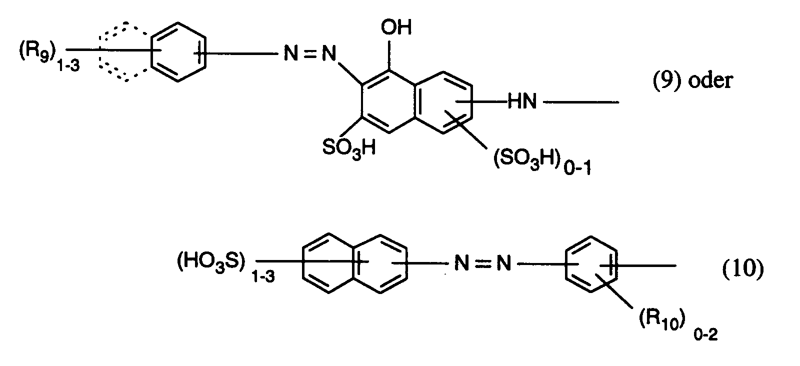 steht, worin (R₉)₁₋₃ 1 bis 3 gleiche oder verschiedene Reste aus der Gruppe Sulfo, Methyl, Methoxy, Acetylamino, Sulfamoyl und Rest der Formel -SO₂-Y oder -CONH-alk-SO₂-Y, worin alk und Y jeweils die im Anspruch 1 angegebene Bedeutung haben, und (R₁₀)₀₋₂ 0 bis 2 gleiche oder verschiedene Reste aus der Gruppe Methyl, 2-Hydroxyethyl, Methoxy, Acetylamino, Propionylamino, Sulfo und Ureido bedeuten.

7. Reaktivfarbstoffe gemäss einem der Ansprüche 1 bis 6, dadurch gekennzeichnet, dass Z Amino, N-C₁-C₄-Alkylamino oder N,N-Di-C₁-C₄-Alkylamino, wobei das Alkyl gegebenenfalls durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl gegebenenfalls durch C₁-C₄-Alkyl, C₁-C₄-Alkoxy, C₂-C₄-Alkanoylamino, Carboxy, Sulfo oder Halogen substituiert ist, bedeutet.

8. Reaktivfarbstoffe gemäss einem der Ansprüche 1 bis 6, dadurch gekennzeichnet, dass Z ein Reaktivrest der Formel (2a) bis (2f) ist, worin W eine Gruppe der Formel -CONH- oder -NHCO-, R₆, R₇ und R₈ je Wasserstoff, B der Rest -O- oder -NH-, alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und m die Zahl 0 bedeuten.

9. Reaktivfarbstoffe gemäss einem der Ansprüche 1 bis 6 oder 8, dadurch gekennzeichnet, dass Z einen faserreaktiven Rest der Formel 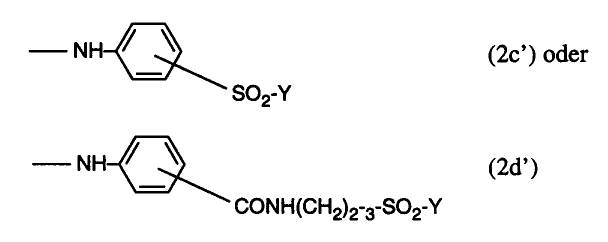 bedeutet, worin Y Vinyl oder β-Sulfatoethyl ist.

10. Reaktivfarbstoffe gemäss einem der Ansprüche 1 bis 6, dadurch gekennzeichnet, dass Z Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen faserreaktiven Rest der Formel 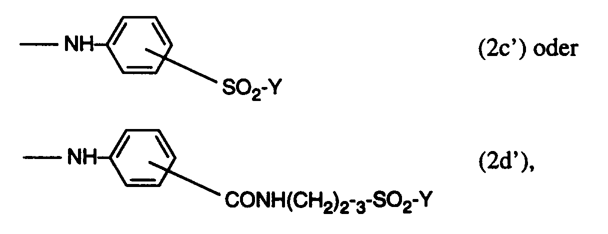 worin Y Vinyl oder β-Sulfatoethyl ist, bedeutet.

11. Reaktivfarbstoffe gemäss einem der Ansprüche 1 bis 10 der Formel 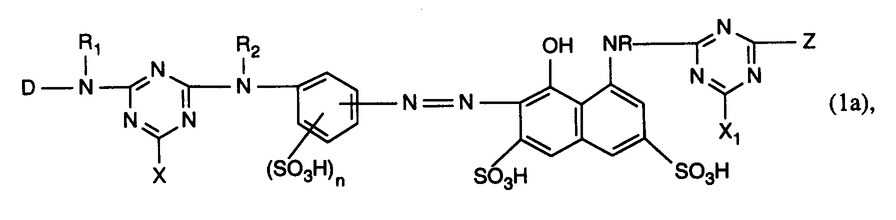 worin D, R, R₁, R₂, X, X₁, Z und n jeweils die im Anspruch 1 angegebenen Bedeutungen haben.

12. Reaktivfarbstoffe gemäss Anspruch 11 der Formel (1a), dadurch gekennzeichnet, dass R₁ und R₂ unabhängig voneinander je Wasserstoff, Methyl oder Ethyl bedeuten, n für die Zahl 1 steht, X Fluor oder Chlor ist, X₁ Fluor, Chlor, Amino, N-C₁-C₄-Alkylamino, das im Alkylteil unsubstituiert oder durch Hydroxy, Sulfato oder Sulfo substituiert ist, Morpholino oder für Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, bedeutet, Z C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen Reaktivrest der im Anspruch 1 angegebenen Formeln (2a) bis (2f), worin W eine Gruppe der Formel -CONH- oder -NHCO-, R₆, R₇ und R₈ je Wasserstoff, B der Rest -O- oder -NH-, alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und m die Zahl 0 sind, ist und D einen Rest der im Anspruch 6 angegebenen Formel (9) bedeutet.

13. Reaktivfarbstoffe gemäss Anspruch 11 der Formel (1a), dadurch gekennzeichnet, dass R₁ und R₂ je Wasserstoff bedeuten, n für die Zahl 1 steht, X Fluor oder Chlor ist, X₁ Fluor, Chlor oder Morpholino bedeutet, Z Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder einen faserreaktiven Rest der Formel 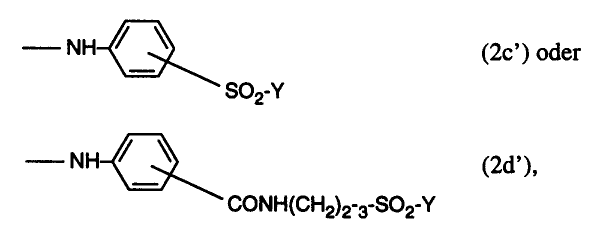 worin Y Vinyl oder β-Sulfatoethyl ist, bedeutet und D einen Rest der Formel 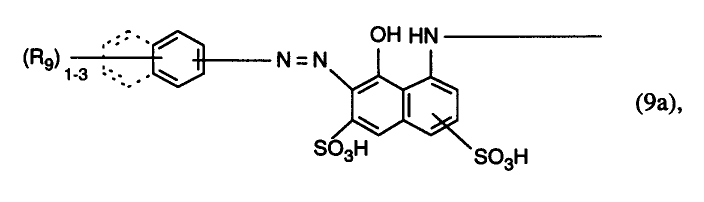 bedeutet, worin (R₉)₁₋₃ für 1 bis 3 gleiche oder verschiedene Reste aus der Gruppe Sulfo, Methyl, Methoxy und Rest der Formel -SO₂-Y, worin Y Vinyl oder β-Sulfatoethyl ist, steht.

14. Verfahren zur Herstellung von Verbindungen der Formel (1) gemäss Anspruch 1, dadurch gekennzeichnet, dass man in etwa 1 Aequivalent eines organischen Farbstoffes der Formel
D-NHR₁ (12)
oder ein Farbstoffvorprodukt, in etwa 1 Aequivalent 2,4,6-Trifluor-s-triazin (Cyanurfluorid) oder 2,4,6-Trichlor-s-triazin (Cyanurchlorid), in etwa 1 Aequivalent der Verbindung der Formel 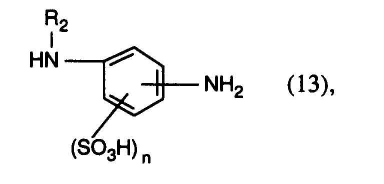 in etwa 1 Aequivalent der Verbindung der Formel 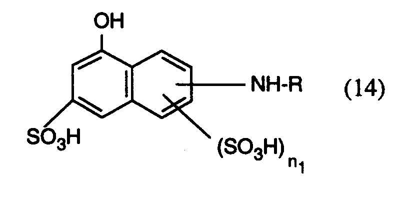 und in etwa 1 Aequivalent einer Verbindung der Formel 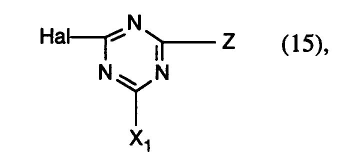 worin D, R, R₁, R₂, X, X₁, Z, n und n₁ jeweils die zuvor angegebene Bedeutung haben und Hal Halogen, vorzugsweise Fluor oder Chlor, bedeutet, durch Diazotierung und Kupplung in beliebiger Reihenfolge miteinander umsetzt, oder, im Fall von Farbstoffvorprodukten, die erhaltenen Zwischenprodukte in die gewünschten Farbstoffe überführt und gegebenenfalls eine weitere Umwandlungsreaktion anschliesst.

15. Verfahren zum Färben oder Bedrucken von cellulosehaltigen Fasermaterialien, dadurch gekennzeichnet, dass man diese Materialien in Gegenwart eines oder mehrerer Reaktivfarbstoffe der Formel (1) gemäss Anspruch 1 färbt.

16. Verfahren gemäss Anspruch 15 zum Färben von Baumwolle.

## Claims

1. A reactive dye of the formula 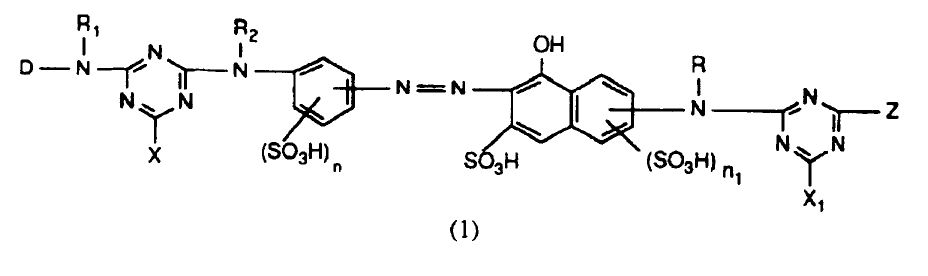 in which
D is the radical of a monoazo, polyazo, metal complex azo, anthraquinone,
phthalocyanine, formazan or dioxazine chromophore,
R, R₁ and R₂ are each, independently of one another, hydrogen or C₁-C₄alkyl which is unsubstituted or substituted by halogen, hydroxyl, cyano, or C₁-C₄alkoxy, C₁-C₄alkoxycarbonyl, carboxyl, sulfamoyl, sulfo or sulfato,
X is chlorine, fluorine, bromine, 3-carboxy-1-pyridinyl or 3-carbamoyl-1-pyridinyl,
X₁ and Z each, independently of one another, have one of the meanings specified for X or are hydroxyl, C₁-C₄alkoxy, phenoxy, C₁-C₄alkylthio, morpholino, amino, N-C₁-C₄alkylamino or N,N-di-C₁-C₄alkylamino where the alkyl is unsubstituted or substituted by sulfo, sulfato, hydroxyl, carboxyl or phenyl, or cyclohexylamino, N-C₁-C₄alkyl-N-phenylamino or phenylamino or naphthylamino where the phenyl or naphthyl is unsubstituted or substituted by C₁-C₄alkyl, C₁-C₄alkoxy, C₂-C₄alkanoylamino, carboxyl, sulfo or halogen, or are a reactive radical of the formula 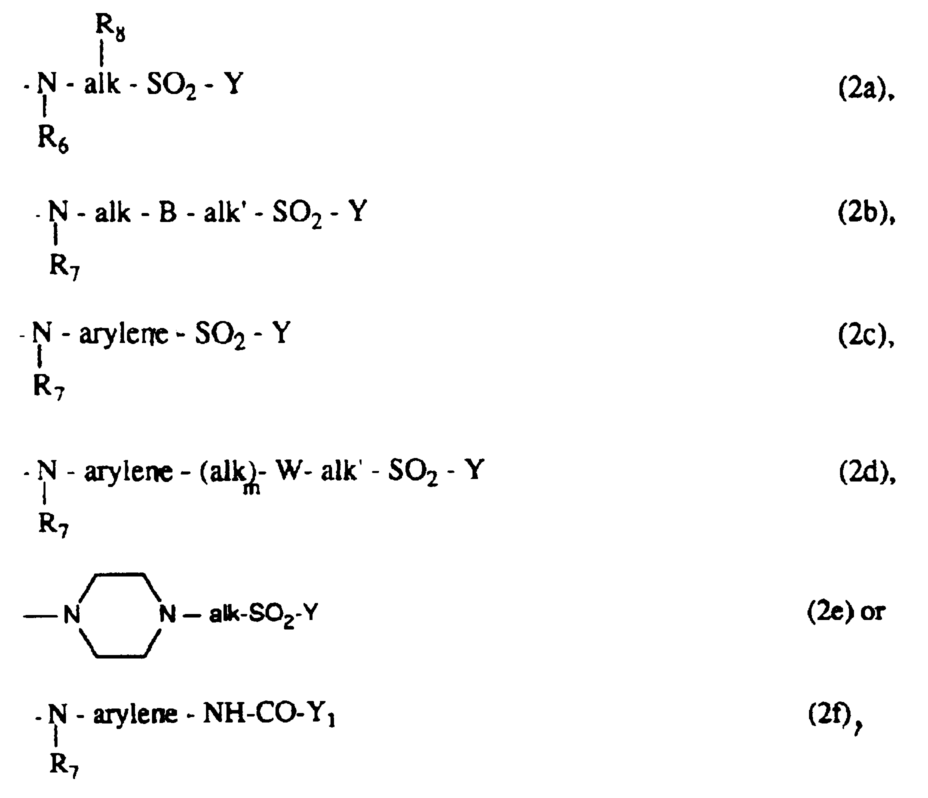
R₆ is hydrogen, C₁-C₄alkyl which is unsubstituted or substituted by hydroxyl, sulfo, sulfato, carboxyl or cyano, or a radical 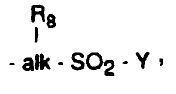
R₇ is hydrogen or C₁-C₄alkyl,
R₈ is hydrogen, hydroxyl, sulfo, sulfato, carboxyl, cyano, halogen, C₁-C₄alkoxycarbonyl, C₁-C₄alkanoyloxy, carbamoyl or the group -SO₂-Y,
alk and alk' are independently of one another, C₁-C₆alkylene,
arylene is a phenylene or naphthylene radical which is unsubstituted or substituted by sulfo, carboxyl, C₁-C₄alkyl, C₁-C₄alkoxy or halogen,
Y is vinyl or a radical -CH₂-CH₂-U and U is a leaving group,
Y₁ is a group -CHX₂-CH₂X₂ or -CX₂=CH₂ and X₂ is chlorine or bromine,
B is the radical -O- or -NR₇-,
W is a group -SO₂-NR₆-, -CONR₆- or -NR₆CO-, and
m is the number 0 or 1, n is the number 1 or 2 and n₁ is the number 0 or 1,
with the proviso that
the chromophore D does not contain a fibre-reactive triazine group if D is a 1-amino-7-(5'-amino-2'-sulfophenylazo)-8-naphthol-3,6-disulfonic acid, 1-amino-7-(5'-amino-2'-sulfophenylazo)-8-naphthol-4,6-disulfonic acid or 2-amino-6-(5'-amino-2'-sulfophenylazo)-5-naphthol-7-sulfonic acid residue.

2. A reactive dye according to claim 1, wherein R, R₁ and R₂ are each, independently of one another, hydrogen, methyl or ethyl.

3. A reative dye according to claim 1 or 2, wherein X is chlorine or fluorine and X₁ is chlorine, fluorine, amino, N-C₁-C₄alkylamino which is unsubstituted or substituted by hydroxyl, sulfato or sulfo in the alkyl moiety, morpholino or phenylamino or N-C₁-C₄alkyl-N-phenylamino in which the phenyl is in each case unsubstituted or substituted by sulfo, carboxyl, acetylamino, methyl or methoxy.

4. A reactive dye according to claim 1 of the formula (1) in which X₁ is chlorine, fluorine, bromine, 3-carboxyl-1-pyridinyl or 3-carbamoyl-1-pyridinyl.

5. A reactive dye according to any one of claims 1 to 4, wherein D is the radical of a monoazo or disazo chromophore.

6. A reactive dye according to any one of claims 1 to 5, wherein D is a monoazo chromophore of the formula 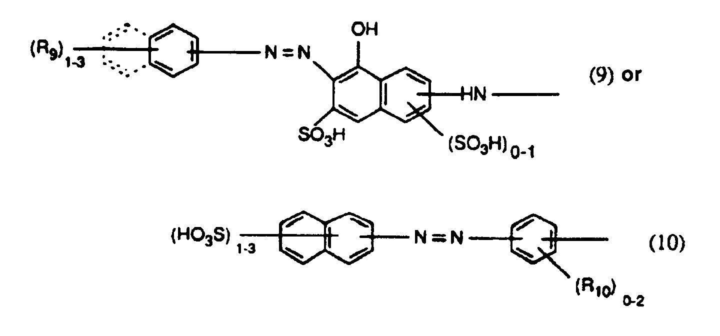 in which (R₉)₁₋₃ is 1 to 3 identical or different radicals from the group consisting of sulfo, methyl, methoxy, acetylamino, sulfamoyl and radical of the formula -SO₂-Y or - CONH-alk-SO₂-Y in which alk and Y each have the meaning indicated in claim 1, and (R₁₀)₀₋₂ is 0 to 2 identical or different radicals from the group consisting of methyl, 2-hydroxyethyl, methoxy, acetylamino, propionylamino, sulfo and ureido.

7. A reactive dye according to any one of claims 1 to 6, wherein Z is amino, N-C₁-C₄alkylamino or N,N-di-C₁-C₄alkylamino where the alkyl is unsubstituted or substituted by sulfo, sulfato, hydroxyl, carboxyl or phenyl, or cyclohexylamino, N-C₁-C₄alkyl-N-phenylamino or phenylamino or naphthylamino where the phenyl or naphthyl is unsubstituted or substituted by C₁-C₄alkyl, C₁-C₄alkoxy, C₂-C₄alkanoylamino, carboxy, sulfo or halogen.

8. A reactive dye according to any one of claims 1 to 6, wherein Z is a reactive radical of the formulae (2a) to (2f) in which W is a group of the formula -CONH- or -NHCO-, R₆, R₇ and R₈ are each hydrogen, B is the radical -O- or -NH-, alk and alk' are each, independently of one another, ethylene or propylene, arylene is phenylene which is unsubstituted or substituted by methyl, methoxy, carboxyl or sulfo, Y is vinyl or β-sulfatoethyl, Y₁ is -CHBr-CH₂Br or -CBr=CH₂ and m is the number 0.

9. A reactive dye according to any one of claims 1 to 6 or 8, wherein Z is a fibre-reactive radical of the formula 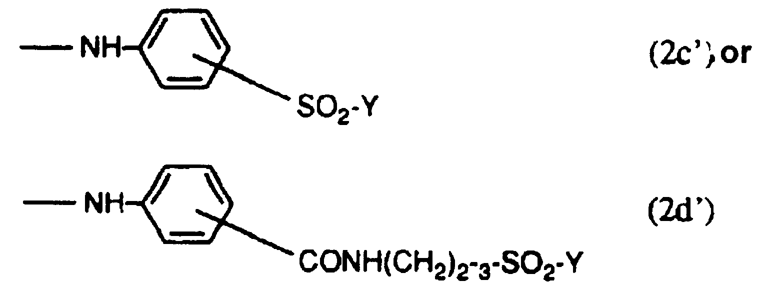 in which Y is vinyl or β-sulfatoethyl.

10. A reactive dye according to any one of claims 1 to 6, wherein Z is amino, N-C₁-C₄alkylamino which is unsubstituted or substituted by hydroxyl, sulfato or sulfo in the alkyl moiety, morpholino, phenylamino or N-C₁-C₄alkyl-N-phenylamino in which the phenyl is in each case unsubstituted or substituted by sulfo, carboxyl, acetylamino, methyl or methoxy, or a fibre-reactive radical of the formula 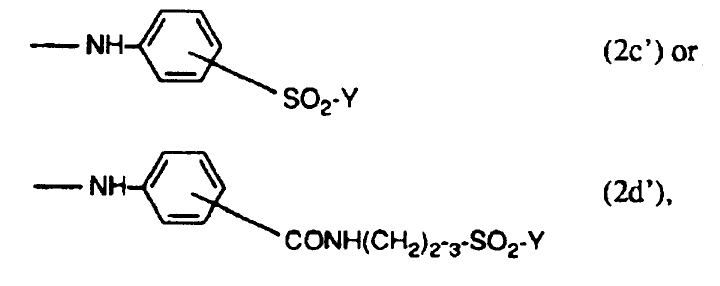 in which Y is vinyl or β-sulfatoethyl.

11. A reactive dye according to any one of claims 1 to 10 of the formula 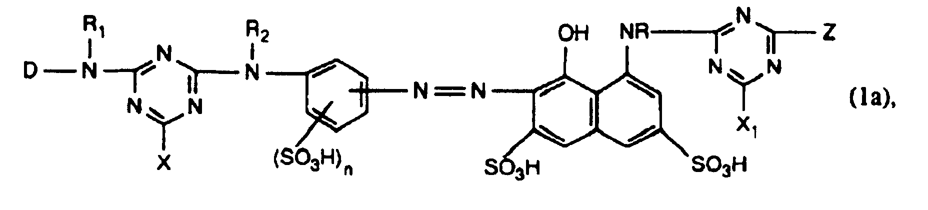 in which D, R, R₁, R₂, X, X₁, Z and n each have the meanings indicated in claim 1.

12. A reactive dye according to claim 11 of the formula (1a), wherein R₁ and R₂ are each, independently of one another, hydrogen, methyl or ethyl, n is the number 1, X is fluorine or chlorine, X₁ is fluorine, chlorine, amino, N-C₁-C₄-alkylamino which is unsubstituted or substituted by hydroxyl, sulfato or sulfo in the alkyl moiety, morpholino or phenylamino or N-C₁-C₄alkyl-N-phenylamino in which the phenyl is in each case unsubstituted or substituted by sulfo, carboxyl, acetylamino, methyl or methoxy, Z is C₁-C₄-alkoxy, C₁-C₄alkylthio, hydroxyl, amino, N-C₁-C₄alkylamino which is unsubstituted or substituted by hydroxyl, sulfato or sulfo in the alkyl moiety, morpholino, phenylamino or N-C₁-C₄alkyl-N-phenylamino in which the phenyl is in each case unsubstituted or substituted by sulfo, carboxyl, acetylamino, methyl or methoxy, or a reactive radical of the formulae (2a) to (2f) indicated in claim 1 in which W is a group of the formula -CONH- or -NHCO-, R₆, R₇ and R₈ are each hydrogen, B is the radical -O- or -NH-, alk and alk' are each, independently of one another, ethylene or propylene, arylene is phenylene which is unsubstituted or substituted by methyl, methoxy, carboxyl or sulfo, Y is vinyl or β-sulfatoethyl, Y₁ is -CHBr-CH₂Br or -CBr=CH₂ and m is the number 0, and D is a radical of the formula (9) indicated in claim 6.

13. A reactive dye according to claim 11 of the formula (1a), wherein R₁ and R₂ are each hydrogen, n is the number 1, X is fluorine or chlorine, X₁ is fluorine, chlorine or morpholino, Z is amino, N-C₁-C₄alkylamino which is unsubstituted or substituted by hydroxyl, sulfato or sulfo in the alkyl moiety, morpholino, phenylamino or N-C₁-C₄alkyl-N-phenylamino in which the phenyl is in each case unsubstituted or substituted by sulfo, carboxyl, acetylamino, methyl or methoxy, or a fibre-reactive radical of the formula 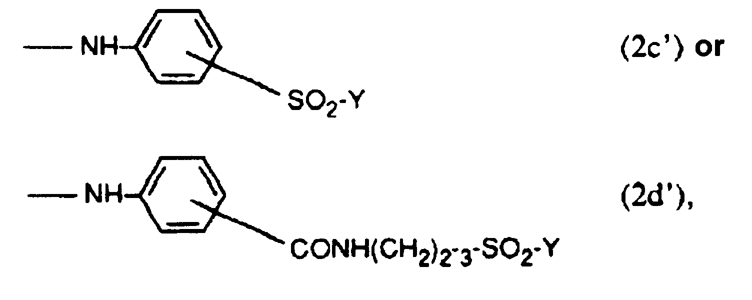 in which Y is vinyl or β-sulfatoethyl, and D is a radical of the formula 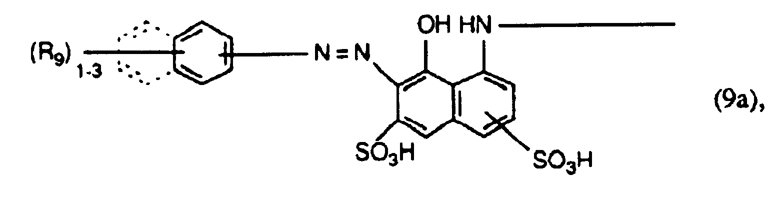 in which (R₉)₁₋₃ is 1 to 3 identical or different radicals from the group consisting of sulfo, methyl, methoxy and radical of the formula -SO₂-Y in which Y is vinyl or β-sulfatoethyl.

14. A process for the preparation of compounds of the formula (1) according to claim 1, which comprises reacting together about 1 equivalent of an organic dye of the formula
D-NHR₁ (12)
or a dye precursor, about 1 equivalent of 2,4,6-trifluoro-s-triazine (cyanuric fluoride) or 2,4,6-trichloro-s-triazine (cyanuric chloride), about 1 equivalent of the compound of the formula 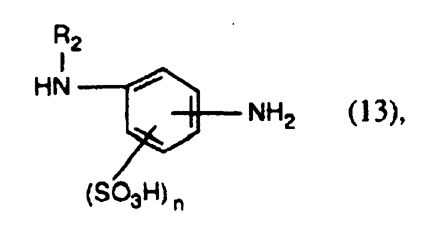 about 1 equivalent of the compound of the formula 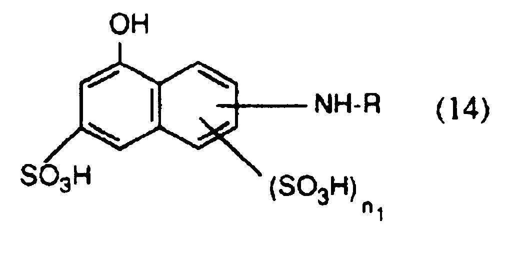 and about 1 equivalent of a compound of the formula 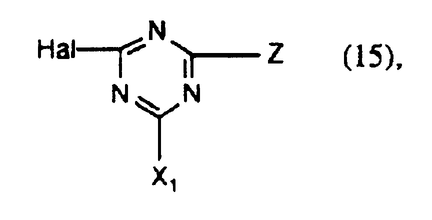 in which D, R, R₁, R₂, X, X₁, Z, n and n₁ each have the abovementioned meaning, and Hal is halogen, preferably fluorine or chlorine, by diazotization and coupling in any desired sequence, or, in the case of dye precursors, converting the resulting intermediates into the desired dyes and, if desired, following by another conversion reaction.

15. A method for dyeing or printing cellulosic fibre materials, which comprises dyeing these materials in the presence of one or more reactive dyes of the formula (1) according to claim 1.

16. A method according to claim 15 for dyeing cotton.

## Revendications

1. Colorants réactifs de formule 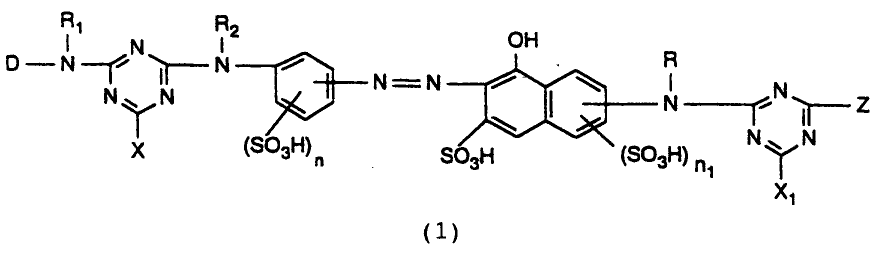 dans laquelle
D représente le reste d'un chromophore du type monoazoïque, polyazoïque, complexe métalazoïque, anthraquinone, phtalocyanine, formazane ou dioxazine,
R, R₁ et R₂ représentent chacun, indépendamment les uns des autres, des atomes d'hydrogène ou des restes alkyle en C₁-C₄ éventuellement substitués par des atomes d'halogène, des substituants hydroxy, cyano, alkoxy en C₁-C₄, (alkoxy en C₁-C₄)carbonyle, carboxy, sulfamoyle, sulfo ou sulfato,
X représente des atomes de chlore, de fluor, de brome, un groupe 3-carboxypyridin-1-yle ou 3-carbamoylpyridin-1-yle,
X₁ et Z possèdent chacun, indépendamment l'un de l'autre, l'une des significations citées pour X ou représentent des groupes hydroxy, alkoxy en C₁-C₄, phénoxy, (alkyl en C₁-C₄)thio, morpholino, amino, N-(alkyl en C₁-C₄)amino ou N,N-di-(alkyl en C₁-C₄)-amino, le fragment alkyle pouvant éventuellement être substitué par des substituants sulfo, sulfato, hydroxy, carboxy ou phényle, cyclohexylamino, N-(alkyl en C₁-C₄)-N-phénylamino ou phénylamino ou naphtylamlno, le groupe phényle ou naphtyle étant éventuellement substitué par des substituants alkyle en C₁-C₄, alkoxy en C₁-C₄, (alcanoyl en C₂-C₄)amino, carboxy, sulfo ou halogène ou représente un reste réactif de formule 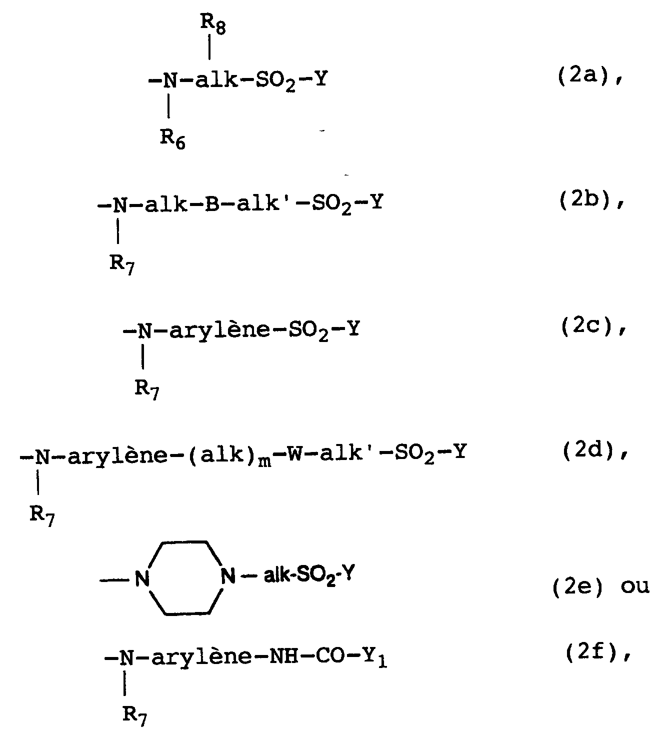
R₆ représente un atome d'hydrogène, un reste 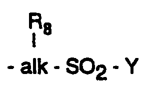 ou un groupe alkyle en C₁-C₄ éventuellement substitué par des substituants hydroxy, sulfo, sulfato, carboxy ou cyano,
R₇ représente un atome d' hydrogène ou un groupe alkyle en C₁-C₄,
R₈ représente un atome d'hydrogène, des groupes hydroxy, sulfo, sulfato, carboxy, cyano, halogène, (alkoxy en C₁-C₄)carbonyle, alcanoyloxy en C₁-C₄, carbamoyle ou le groupe -SO₂-Y,
alk et alk' représentent indépendamment l'un de l'autre un groupe alkylène en C₁-C₆,
arylène représente un reste phénylène ou naphtylène non substitué ou substitué par des substituants sulfo, carboxy, alkyle en C₁-C₄, alkoxy en C₁-C₄ ou halogène,
Y représente un groupe vinyle ou un reste -CH₂-CH₂-U et U est un groupe partant,
Y₁ représente un groupe -CHX₂-CH₂X₂ ou -CX₂=CH₂ et X₂ représente un atome de chlore ou de brome,
B représente le reste -O- ou -NR₇-,
W représente un groupe -SO₂-NR₆-, -CONR₆- ou -NR₆CO-, et
m vaut 0 ou 1, n vaut 1 ou 2 et n₁ vaut 0 ou 1,
à la condition que
le chromophore D ne présente pas de groupe triazine réactif sur la fibre, dans le cas où D représente un reste
acide 1-amino-7-(5'-amino-2'-sulfophénylazo)-8-naphtol-3,6-disulfonique,
acide 1-amino-7-(5'-amino-2'-sulfophénylazo)-8-naphtol-4,6-disulfonique ou
acide 2-amino-6-(5'-amino-2'-sulfophénylazo)-5-naphtol-7-sulfonique.

2. Colorants réactifs selon la revendication 1, caractérisés en ce que R, R₁ et R₂ représentent chacun, indépendamment les uns des autres, un atome d'hydrogène, un groupe méthyle ou éthyle.

3. Colorants réactifs selon la revendication 1 ou 2, caractérisés en ce que X représente un atome de chlore ou de fluor et X₁ représente un atome de chlore, un atome de fluor, des groupes amino, N-(alkyl en C₁-C₄)-amino, lequel est non substitué sur le fragment alkyle par des substituants hydroxy, sulfato ou sulfo, mrpholino ou phénylamino ou N-(alkyl en C₁-C₄)-N-phénylamino, où le groupe phényle est chaque fois non substitué ou substitué par des substituants sulfo, carboxy, acétylamino, méthyle ou méthoxy.

4. Colorants réactifs selon la revendication 1 de formule (1), où X₁ représente des atomes de chlore, de fluor, de brome, des groupes 3-carboxypyridin-1-yle ou 3-carbamoylpyridin-1-yle.

5. Colorants réactifs selon l'une des revendications 1 à 4, caractérisés en ce que D est le reste chromophore monoazoïque ou disazoïque.

6. Colorants réactifs selon l'une des revendications 1 à 5, caractérisés en ce que D est le reste chromophore monoazoïque 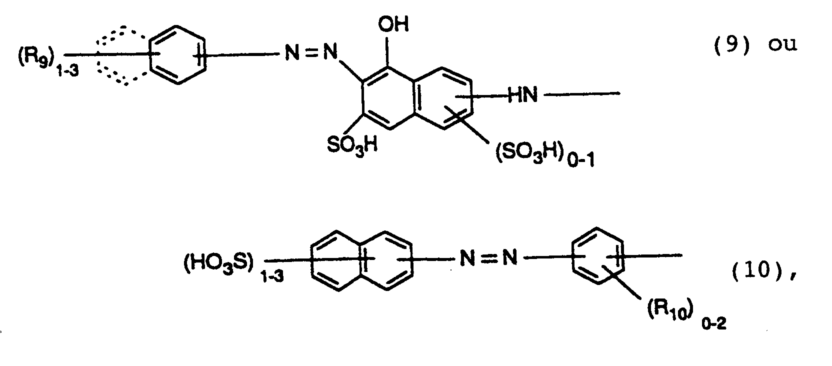 où
(R₉)₁₋₃ représente 1 à 3 restes identiques ou différents pris parmi les restes sulfo, méthyle, méthoxy, acétylamino, sulfamoyle et le reste de formule -SO₂-Y ou -CONH-alk-SO₂-Y, où alk et Y possèdent chacun les significations données à la revendication 1, et
(R₁₀)₀₋₂ représente 0 à 2 restes identiques ou différents pris parmi les restes méthyle, 2-hydroxyéthyle, méthoxy, acétylamino, propionylamino, sulfo et uréido.

7. Colorants réactifs selon l'une des revendications 1 à 6, caractérisés en ce que Z représente des groupes amino, N-(alkyl en C₁-C₄)-amino ou N,N-di-(alkyl en C₁-C₄)-amino, le fragment alkyle pouvant éventuellement être substitué par des substituants sulfo, sulfato, hydroxy, carboxy ou phényle, cyclohexylamino, N-(alkyl en C₁-C₄)-N-phénylamino ou phénylamino ou naphtylamino, où le groupe phényle est non substitué ou substitué par des substituants alkyl en C₁-C₄, alkoxy en C₁-C₄, (alcanoyl en C₂-C₄)amino, carboxy, sulfo ou halogène.

8. Colorants réactifs selon l'une des revendications 1 à 6, caractérisés en ce que Z représente un reste réactif de formule (2a) à (2f), où W représente un groupe de formule -CONH- ou -NHCO-, R₆, R₇ et R₈ représentent chacun un atome d'hydrogène, B représente le reste -O- ou -NH-, alk et alk' représentent chacun, indépendamment l'un de l'autre, un groupe éthylène ou propylène, arylène représente un groupe phénylène non substitué ou substitué par des groupes méthyle, méthoxy, carboxy ou sulfo, Y représente un groupe vinyle ou β-sulfatoéthyle, Y₁ représente un groupe -CHBr-CH₂Br ou CBr=CH₂ et m vaut 0.

9. Colorants réactifs selon l'une des revendications 1 à 6 ou 8, caractérisés en ce que Z représente un reste réactif sur la fibre de formule 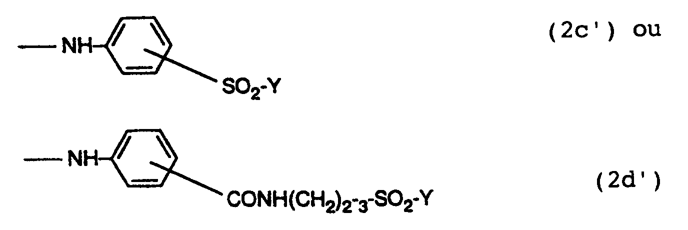 où Y représente un groupe vinyle ou β-sulfatoéthyle.

10. Colorants réactifs selon l'une des revendications 1 à 6, caractérisés en ce que Z représente des groupes amino, N-(alkyl en C₁-C₄)-amino lequel est non substitué ou substitué sur le fragment alkyle par des substituants hydroxy, sulfato ou sulfo, morpholino, phénylamino ou N-(alkyl en C₁-C₄)-N-phénylamino, où le groupe phényle est chaque fois non substitué ou substitué par des substituants sulfo, carboxy, acétylamino, méthyle ou méthoxy, ou un reste réactif sur la fibre de formule 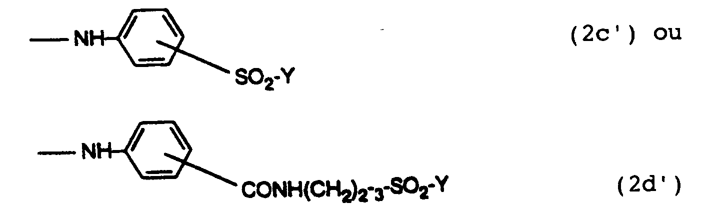 où Y représente un groupe vinyle ou β-sulfatoéthyle.

11. Colorants réactifs selon l'une des revendications 1 à 10 de formule 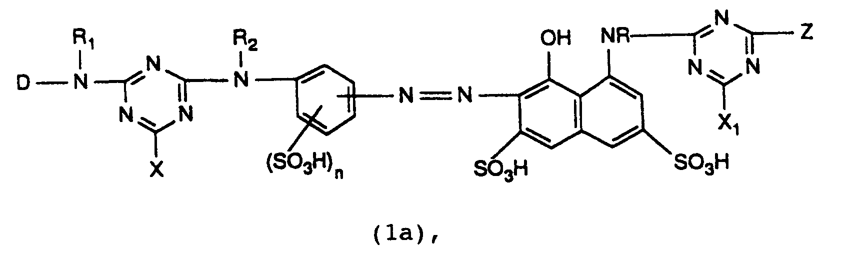 où à D, R, R₁, R₂, X, X₁, Z et n s'appliquent chacune des significations et des préférences données à la revendication 1.

12. Colorants réactifs selon la revendication 11 de formule (1a), caractérisés en ce que R₁ et R₂ représentent chacun, indépendamment l'un de l'autre, des atomes d'hydrogène, des groupes méthyle ou éthyle, n vaut 1, X représente un atome de fluor ou de chlore, X₁ représente un atome de fluor, un atome de chlore, des groupes amino, N-(alkyl en C₁-C₄)amino, lequel est non substitué ou substitué sur le fragment alkyle par de substituants hydroxy, sulfato ou sulfo, morpholino ou phénylamino ou N-(alkyle en C₁-C₄)-N-phénylamino, où le groupe phényle est chaque fois non substitué ou substitué par des substituants sulfo, carboxy, acétylamino, méthyle ou méthoxy, Z représente des groupes alkoxy en C₁-C₄, (alkyl en C₁-C₄)thio, hydroxy, amino, N-(alkyl en C₁-C₄)amino, qui est non substitué ou substitué sur le fragment alkyle par des substituants hydroxy, sulfato ou sulfo, morpholino, phénylamino ou N-(alkyle en C₁-C₄)-N-phénylamino, où le groupe phényle est chaque fois non substitué ou substitué par des substituants sulfo, carboxy, acétylamino, méthyle ou méthoxy, ou un reste réactif des formules (2a) à (2f) données auparavant, où W représente un groupe de formule -CONH- ou -NHCO-, R₆, R₇ et R₈ représentent chacun un atome d'hydrogène, B représente le reste -O- ou -NH-, alk et alk' représentent chacun, indépendamment l'un de l'autre, un groupe éthylène ou propylène, arylène représente un groupe phénylène non substitué ou substitué par des substituants méthyle, méthoxy, carboxy ou sulfo, Y représente un groupe vinyle ou β-sulfatoéthyle, Y₁ représente un groupe -CHBr-CH₂Br ou -CBr=CH₂ et m vaut 0, et D représente un reste de formule (9) donnée auparavant.

13. Colorants réactifs selon la revendication 11 de formule (1a), caractérisés en ce que R₁ et R₂ représentent chacun un atome d'hydrogène, n vaut 1, X représente un atome de fluor ou de chlore, X₁ représente un atome de chlore, un atome de fluor ou un groupe morpholino, Z représente des groupes amino, N-(alkyl en C₁-C₄)amino, lequel est non substitué ou substitué sur le fragment alkyle par des substituants hydroxy, sulfato ou sulfo, morpholino, phénylamino ou N-(alkyl en C₁-C₄)-N-phényalmino, où le groupe phényle est chaque fois non substitué ou substitué par des substituants sulfo, carboxy, acétylamino, méthyle ou méthoxy, ou un reste réactif sur la fibre de formule 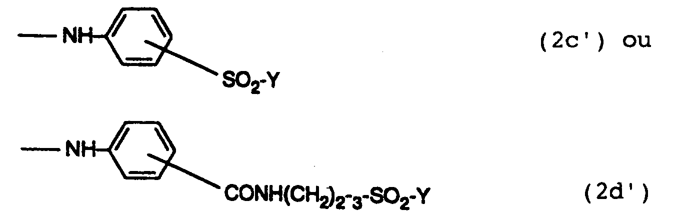 où Y représente un groupe vinyle ou β-sulfatoéthyle et D représente un reste de formule 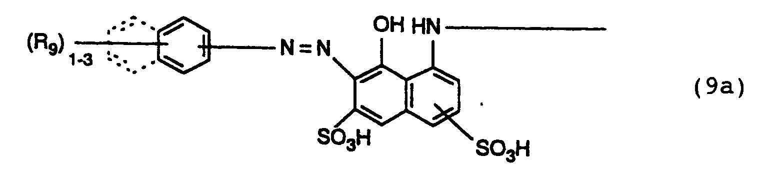 où (R₉)₀₋₃ représente 1 à 3 restes identiques ou différents pris parmi les restes sulfo, méthyle, méthoxy et un reste de formule -SO₂-Y, où Y représente un groupe vinyle ou β-sulfatoéthyle.

14. Procédé de préparation de composés de formule (1) selon la revendication 1, caractérisé en ce qu'on fait réagir environ 1 équivalent d'un colorant organique de formule
D-NHR₁ (12)
ou un précurseur de colorant, avec environ 1 équivalent de 2,4,6-trifluoro-s-triazine (fluorure de cyanuryle) ou 2,4,6-trichloro-s-triazine (chlorure de cyanuryle) avec environ 1 équivalent du composé de formule 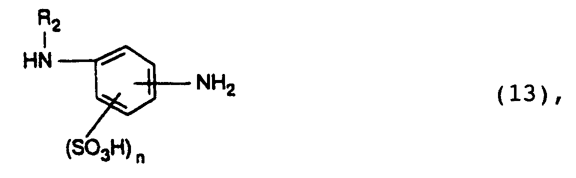 avec environ 1 équivalent du composé de formule 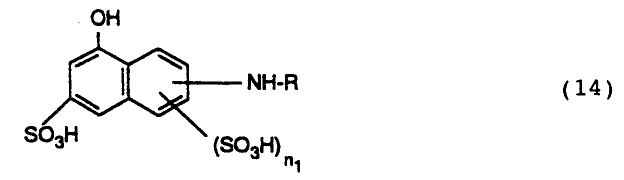 et environ 1 équivalent d'un composé de formule 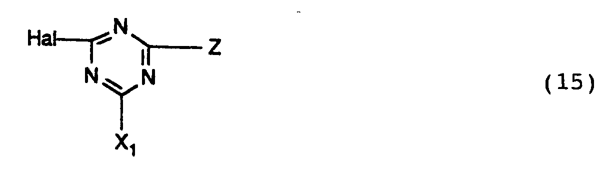 où D, R, R₁, R₂, X, X₁, Z, n et n₁ possèdent chacun la signification donnée auparavant et Hal représente un atome d'halogène, de préférence un atome de fluor ou de chlore, par diazotation et copulation dans un ordre arbitraire ou, dans le cas de précurseurs de colorants, en transformant les produits intermédiaires obtenus en les colorants voulus et éventuellement en faisant suivre d'une autre réaction de transformation.

15. Procédé de teinture ou d'impression de matières fibreuses cellulosiques caractérisé en ce qu'on teint ces matières en présence d'un ou de plusieurs colorants réactifs de formule (1) selon la revendication 1.

16. Procédé selon la revendication 15 pour la teinture du coton.
